# EUROPÄISCHE PATENTSCHRIFT

(11) **EP 3 472 878 B1**
(45) Veröffentlichungstag und Bekanntmachung des Hinweises auf die Patenterteilung: **15.07.2020**
(21) Anmeldenummer: 17734014.8
(22) Anmeldetag: 19.06.2017
(51) Int. Cl.: H01M 2/10, H01M 2/20, H01M 10/613, H01M 10/643, H01M 10/653

(54) **AKKUMULATORMODUL MIT OPTIMIERTER WÄRMEABFUHR**
RECHARGEABLE BATTERY MODULE HAVING OPTIMIZED HEAT DISSIPATION
MODULE ACCUMULATEUR À DISSIPATION THERMIQUE OPTIMISÉE

(30) Priorität: 20.06.2016 DE 202016103251 U
(43) Veröffentlichungstag der Anmeldung: 24.04.2019
(73) Patentinhaber: Commeo GmbH, 49134 Wallenhorst (DE)
(72) Erfinder: SCHNAKENBERG, Michael, 49134 Wallenhorst (DE)
(74) Vertreter: Werner & ten Brink
(86) Internationale Anmeldenummer: PCT/EP2017/064982
(87) Internationale Veröffentlichungsnummer: WO 2017/220514

(56) Entgegenhaltungen:
- DE-A1-102014 209 444
- US-A1- 2014 234 668

## Beschreibung

Die Erfindung betrifft allgemein eine grundsätzlich an sich bekannte Vorrichtung zur Speicherung elektrischer Energie und zur Kontaktierung davon umfasster Energiespeicherzellen, also eine als Energiespeicher fungierende Vorrichtung (Energiespeichervorrichtung). Die DE 10 2012 213 273 A1 beschreibt eine Energiespeichervorrichtung für ein Fahrzeug. Allgemein werden Energiespeichervorrichtungen zur mobilen Energieversorgung, zur Notstromversorgung und dergleichen verwendet.

Eine Aufgabe der vorliegenden Erfindung besteht darin, eine im Folgenden als Akkumulatormodul bezeichnete Energiespeichervorrichtung mit einer optimierten Wärmeabfuhr bei von dem Akkumulatormodul umfassten Akkuzellen anzugeben.

Kurz gefasst schlägt die Erfindung eine neue Art der Wärmeabfuhr aus im Folgenden als Akkuzellen bezeichneten Akkumulatoreinheiten - den als Energiespeicherzellen fungierenden sogenannten Sekundärzellen -, insbesondere Akkuzellen in Form von Rundzellen, und bei einer besonderen Ausführungsform eine optional damit kombinierbare neue Art zur effizienten Stromführung bei von dem Akkumulatormodul umfassten Akkuzelle, insbesondere einer Akkuzelle in Form einer Rundzelle, oder einer Gruppe solcher Akkuzellen vor.

Dies geschieht, indem die Zellkontaktierung, nämlich eine elektrisch leitfähige Zellkontaktierung zur Stromführung von und/oder zur jeweiligen Akkuzelle, ausschließlich von einer Seite erfolgt. Somit steht die gegenüberliegende Seite zur reinen Wärmeabführung zur Verfügung. Die Wärme kann somit auf kürzestem Wege auf eine oder zu einer Kühlfläche oder dergleichen transportiert werden. Die Akkuzellen werden hierbei über eine als Träger fungierende Zellhalterung in Position gehalten.

Die oben genannte Aufgabe wird erfindungsgemäß mittels eines als Energiespeichervorrichtung fungierenden Akkumulatormoduls mit den Merkmalen des Anspruchs 1 gelöst. Bei einem solchen Akkumulatormodul ist im Innern eines Gehäuses des Akkumulatormoduls zumindest ein mit einer Mehrzahl von Akkuzellen bestückbarer Träger platzierbar und bei einem betriebsbereiten Akkumulatormodul ist im Innern von dessen Gehäuse zumindest ein mit einer Mehrzahl von Akkuzellen bestückter Träger platziert.

Jede Akkuzelle ist in dem Träger lediglich einseitig elektrisch kontaktiert und der oder jeder mit Akkuzellen bestückte Träger ist im Innern des Gehäuses des Akkumulatormoduls in einer die freien Stirnflächen der Akkuzellen thermisch an einen Kühlkörper koppelnden Form platzierbar, zum Beispiel an eine als Kühlkörper fungierende Seitenfläche des Gehäuses. Dann fungiert das Gehäuse zum Beispiel als Kühlkörper. Das Gehäuse oder die betreffende Seitenfläche des Gehäuses nimmt die von den Akkuzellen abgeleitete Wärmeenergie auf und gibt diese zum Beispiel durch Konvektion an die Umgebung ab. Zusätzlich oder alternativ kann mittels des Gehäuses oder der betreffenden Seitenfläche des Gehäuses auch eine gezielte Erwärmung der Akkuzellen erfolgen.

Jede Akkuzelle ist zudem in dem Träger einzeln axial federnd gelagert. Diese einzelne federnde Lagerung gewährleistet, dass bei in ihrer Gesamtheit gegen einen Kühlkörper oder eine Innenoberfläche des Gehäuses gedrückten Akkuzellen ein Toleranzausgleich möglich ist, sodass gewährleistet ist, dass jede einzelne Akkuzelle mit ihrer freien Stirnfläche an der jeweiligen Fläche (Kühlkörper, Gehäuse) anliegt.

Die Besonderheit des hier vorgeschlagenen Akkumulatormoduls besteht in der Zusammenfassung der lediglich einseitigen elektrisch kontaktierten Akkuzellen in dem Träger. Herkömmlich werden Akkuzellen, deren Außenflächen als Pole fungie-ren, bekanntlich an beiden Enden, also zum Beispiel Akkuzellen in Form von Rundzellen an ihren beiden Stirnseiten/Stirnflächen, kontaktiert, wie dies zum Beispiel in der DE 10 2014 209 444 A1 der Fall ist.

Eine einseitige Kontaktierung mehrerer Akkuzellen ist aus der US 2014/0234668 A1 bereits bekannt. Dort werden jeweils zwei Akkuzellen stirnseitig mittels Bonddrähten kontaktiert.

Die im Folgenden mitunter kurz nur als einseitige Kontaktierung bezeichnete lediglich einseitige elektrische Kontaktierung der Akkuzellen ermöglicht eine besonders platzsparende Form der elektrisch leitenden Verbindung einer Vielzahl von Akkuzellen und wegen der fehlenden Notwendigkeit, Leiterzüge von einem Ende einer Akkuzelle bis in den Bereich des gegenüberliegenden Endes vorsehen zu müssen, auch eine hohe Packungsdichte einer Vielzahl von Akkuzellen, wie sie nach dem hier vorgeschlagenen Ansatz in einem Akkumulatormodul zusammengefasst sind. Des Weiteren führen die kurzen Leiterstrecken und wenigen Materialübergänge zu einer nur geringen Verlustleistung. Die einseitige Kontaktierung und die damit mögliche Zusammenfassung der Akkuzellen führt aber auch dazu, dass alle Akkuzellen eines Trägers in diesem in der vorstehend beschriebenen Art platzierbar sind.

Die genannte einseitige Kontaktierung bezieht sich nicht notwendig auf eine einzelne geometrische Außenfläche der jeweiligen Akkuzelle/Rundzelle. Vielmehr bezieht sich die einseitige Kontaktierung auf eines der einander entlang einer Längsachse der Akkuzelle/Rundzelle gegenüberliegenden Enden der jeweiligen Akkuzelle/Rundzelle. Bei einer zylindrischen Akkuzelle (Rundzelle) oder einer Akkuzelle mit der geometrischen Form eines allgemeinen Zylinders kann sich die einseitige Kontaktierung damit grundsätzlich auf die Deckel- oder Bodenfläche der Rundzelle beschränken, indem zum Beispiel konzentrische Abschnitte der Deckel- oder Bodenfläche als Pole fungieren. Genauso kann die einseitige Kontaktierung aber die Deckel- oder Bodenfläche sowie einen deckel- bzw. bodenseitigen Abschnitt der Mantelfläche betreffen, indem einerseits ein Abschnitt der Deckel- oder Bodenfläche sowie andererseits ein deckel- bzw. bodenseitiger Abschnitt der Mantelfläche als Pole fungieren. Ein deckelseitiger Abschnitt der Mantelfläche einer Akkuzelle ist ein an die Deckelfläche anschließender Flächenabschnitt; ein bodenseitiger Abschnitt der Mantelfläche einer Akkuzelle ist entsprechend ein an die Bodenfläche anschließender Flächenabschnitt. Eine Kontaktierung der Deckelfläche einerseits und der Bodenfläche andererseits ist dagegen keine einseitige Kontaktierung. Genauso ist eine Kontaktierung der Deckelfläche und eines bodenseitigen Abschnitts der Mantelfläche oder eine Kontaktierung der Bodenfläche und eines deckelseitigen Abschnitts der Mantelfläche keine einseitige Kontaktierung.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Des Weiteren ist im Hinblick auf eine Auslegung der Ansprüche sowie eine Auslegung der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Akkumulatormoduls nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Akkumulatormoduls ragen die freien Enden der lediglich einseitig elektrisch kontaktierten Akkuzellen über den Träger hinaus, weisen in dieselbe Richtung und die freien Stirnflächen der Akkuzellen befinden sich in einer Ebene oder zumindest im Wesentlichen in einer Ebene. Indem die freien Enden der lediglich einseitig elektrisch kontaktierten Akkuzellen über den Träger hinausragen, allesamt in dieselbe Richtung weisen und die freien Stirnflächen der Akkuzellen sich in einer Ebene oder zumindest im Wesentlichen in einer Ebene befinden, ergibt sich gewissermaßen eine Stirnflächenebene, welche mittelbar oder unmittelbar in Kontakt mit einem Kühlkörper oder dem dann als Kühlkörper fungierenden Gehäuse des Akkumulatormoduls gebracht werden kann. Die Stirnflächenebene gewährleistet, dass alle Akkuzellen eines Trägers an der Entwärmung (oder der Erwärmung) teilnehmen.

Bei einer besonderen Ausführungsform des Akkumulatormoduls sind zwei mit Akkuzellen bestückte Träger mittels zumindest eines Distanzstücks im Gehäuse des Akkumulatormoduls fixierbar und diese Fixierung bewirkt, dass die freien Stirnflächen der in den Trägern platzierten Akkuzellen zur Wärmeabfuhr an das Gehäuse an der Innenoberfläche des Gehäuses anliegen. Durch das zumindest eine Distanzstück wird also einerseits die Fixierung der Träger im Gehäuse und andererseits die thermische Ankopplung der Akkuzellen an das Gehäuse bewirkt. Das zumindest eine Distanzstück spreizt die beiden Träger im Gehäuse auseinander und presst die in den Trägern platzierten Akkuzellen an die Innenoberfläche des Gehäuses.

Bei einer weiteren Ausführungsform des Akkumulatormoduls weist dieses einen Isolator zwischen den freien Stirnflächen der Akkuzellen und einer Innenoberfläche des Gehäuses auf, wobei zur thermischen Ankopplung der freien Stirnflächen der Akkuzellen an das Gehäuse die freien Stirnflächen der Ackuzellen an dem Isolator anliegen und der Isolator wiederum mit der Innenoberfläche des Gehäuses zum Beispiel durch Verkleben verbunden ist. Die freien Stirnflächen der Akkuzellen bilden den Boden eines Bechers, der die Akkuzellen weitgehend umschließt und der am gegenüberliegenden Ende durch eine weitere Stirnfläche mit einem dortigen stirnseitigen Kontakt verschlossen ist. Die freien Stirnflächen stellen damit genauso wie die Mantelfläche der Akkuzellen einen von deren Polen dar. Bei einem elektrisch leitenden Gehäuse würde ein unmittelbarer Kontakt mit der Innenoberfläche des Gehäuses alle diese Pole elektrisch leitend kontaktieren. Bei einem Akkumulatormodul mit einem elektrisch leitenden Gehäuse ist demnach ein Isolator zwischen den freien Stirnflächen der Akkuzellen und der von diesen thermisch kontaktierten Innenoberfläche des Gehäuses vorgesehen. Dann kann zum Beispiel auch ein metallisches Gehäuse für das Akkumulatormodul verwendet werden. Als Isolator kommt zum Beispiel ein Isolator in Form einer auf die Innenoberfläche der oder jeder thermisch kontaktierten Seitenfläche des Gehäuses aufgebrachten, insbesondere aufgeklebten Isolatorfolie in Betracht.

Bei einer speziellen Ausführungsform eines Akkumulatormoduls mit einzeln axial federnd gelagerten Akkuzellen gehört zu einem/jedem Träger eine Mehrzahl regelmäßig beabstandeter und parallel zueinander ausgerichteter Zellverbinder, wobei jede Akkuzelle in dem Träger einzeln axial federnd gelagert ist, indem federnde Kontaktzungen eines Zellverbinders und Kontaktfahnen eines weiteren Zellverbinders jeweils eine Ackuzelle kontaktieren. Bei dieser Ausführungsform fungieren als Kontaktierungsmittel zur lediglich einseitigen elektrischen Kontaktierung der Akkuzellen spezielle elektrisch leitende Zellverbinder, welche einerseits einen stirnseitigen Kontakt, insbesondere einen Mittelkontakt, zumindest einer Akkuzelle oder die stirnseitigen Kontakte, insbesondere Mittelkontakte, aller Akkuzellen einer Gruppe von Akkuzellen und andererseits eine Mantelfläche zumindest einer Akkuzelle oder die Mantelflächen aller Akkuzellen einer Gruppe von Akkuzellen kontaktieren. Dies ist eine mögliche und die bei dem hier vorgeschlagenen Ansatz bevorzugte Ausführungsform zur insbesondere werkzeuglos lösbaren lediglich einseitigen elektrischen Kontaktierung der Akkuzellen. Die Kontaktierung erfolgt von der Deckelfläche einer Akkuzelle/Rundzelle und einem dortigen stirnseitigen Kontakt zu einer Seitenfläche einer weiteren Akkuzelle/Rundzelle oder umgekehrt.

Die weitere Beschreibung wird auf Basis von Mittelkontakten als stirnseitigen Kontakten der Akkuzellen fortgesetzt. Bei jeder Erwähnung eines Mittelkontakts ist die allgemeinere Spezifikation als stirnseitiger Kontakt gleichwohl stets mitzulesen.

Bei einer weiteren Ausführungsform eines gegenständlichen Ackumulatormoduls zeichnet sich jeder Zellverbinder durch eine langgestreckte Form aus und kontaktiert entlang seiner Längserstreckung die Mittelkontakte mehrerer Akkuzellen sowie die Mantelflächen mehrerer weiterer Akkuzellen. Darüber hinaus weist ein solcher langgestreckter Zellverbinder zur Kontaktierung der Mittelkontakte federnde Kontaktzungen sowie zur Kontaktierung der Mantelflächen Kontaktfahnen, optional ebenfalls federnde Kontaktfahnen, auf. Aufgrund der langgestreckten Form kann jeder Zellverbinder mehrere Akkuzellen kontaktieren, nämlich mehrere in einer Reihe angeordnete Ackuzellen. Eine ohne eine solche langgestreckte Form notwendige Querverdrahtung entfällt damit. Dies spart Platz, führt zu einer reduzierten Anzahl von Materialübergängen und führt damit zu einer reduzierten Verlustleistung und vereinfacht schließlich die Montage eines Akkumulatormoduls. Aufgrund der federnden Kontaktzungen ist ein Toleranzausgleich gegeben und eine sichere elektrisch leitende Kontaktierung der Akkuzellen, vor allem eine gleichzeitige sichere elektrisch leitende Kontaktierung mehrerer Akkuzellen, ist gewährleistet.

Bei einer speziellen Ausführungsform des gegenständlichen Ackumulatormoduls ist vorgesehen, dass jeder Zellverbinder in einem gestuften Profil einen horizontalen Abschnitt, zumindest einen daran anschließenden vertikalen oder zumindest im Wesentlichen vertikalen Abschnitt, optional mehrere entlang der Längserstreckung des Zellverbinders regelmäßig beabstandete vertikale Abschnitte, und wiederum daran anschließend zumindest einen seitlichen Abschnitt bzw. mehrere an jeweils einen vertikalen Abschnitt anschließende seitliche Abschnitte umfasst und dass die Kontaktzungen zu dem horizontalen Abschnitt und die Kontaktfahnen zu dem seitlichen Abschnitt bzw. den seitlichen Abschnitten gehören. Durch das gestufte Profil kann ein Zellverbinder einerseits eine Mehrzahl von Akkuzellen auf deren Deckelseiten und anderseits eine Mehrzahl von weiteren Akkuzellen an deren Mantelflächen kontaktieren, sodass sich für eine Mehrzahl von Akkuzellen die oben genannte einseitige Kontaktierung ergibt.

Bei einer nochmals weiteren Ausführungsform des gegenständlichen Akkumulatormoduls weisen die davon umfassten Akkuzellen in ihren Mantelflächen eine Einschnürung in Form einer ganz oder zumindest abschnittsweise in Umfangsrichtung umlaufenden Rille (längliche Vertiefung) auf und die Kontaktfahnen der Zellverbinder greifen zur elektrisch leitenden Kontaktierung der Akkuzellen in deren Einschnürungen ein. Die in solche Einschnürungen eingreifenden Kontaktfahnen sind quer oder im Wesentlichen quer zur Mittellängsachse der Akkuzellen ausgerichtet. Die in die Einschnürungen eingreifenden Kontaktfahnen fixieren folglich die Akkuzellen in axialer Richtung. Die beim Eingriff in die Einschnürungen resultierende Kontaktierung der Akkuzellen erfüllt demnach eine Doppelfunktion. Zum einen ergibt sich eine sichere elektrisch leitende Kontaktierung. Zum anderen ergibt sich eine mechanische Kontaktierung, welche zu einer axialen Fixierung der Akkuzellen führt.

Bei einer Ausführungsform eines Akkumulatormoduls, bei dem eine elektrisch leitende Kontaktierung und eine axiale Fixierung der Akkuzellen mittels Kontaktfahnen erfolgt, welche in Einschnürungen in den Mantelflächen der Akkuzellen eingreifen, ist eine/jede in dem Träger platzierte Akkuzelle mittels der oder jeder in die Einschnürung eingreifenden Kontaktfahne in dem Träger lösbar verrastbar. Jeder Zellverbinder ist dafür zumindest abschnittsweise mit dem Träger verbunden, zum Beispiel indem der Zellverbinder im oder am Träger fixiert ist. Die Verrastung einer Akkuzelle erfolgt durch den Eingriff zumindest einer Kontaktfahne in deren Einschnürung. Die Verrastung kann gelöst werden, wenn die oder jede Kontaktfahne außer Eingriff mit der Einschnürung gebracht wird.

Bei einer weiteren Ausführungsform eines Akkumulatormoduls, bei dem eine elektrisch leitende Kontaktierung und eine axiale Fixierung mittels Kontaktfahnen erfolgt, welche in Einschnürungen in den Mantelflächen der Akkuzellen eingreifen, ist eine/jede in dem Träger platzierte Akkuzelle mittels der oder jeder deren Mittelkontakt kontaktierenden Kontaktzunge eines Zellverbinders sowie der oder jeder in die Einschnürung eingreifenden Kontaktfahne eines weiteren Zellverbinders durch die beiden Zellverbinder einspannbar und im eingesetzten Zustand durch die beiden Zellverbinder und die Kontaktzungen bzw. Kontaktfahnen eingespannt. Dieses Einspannen bewirkt, dass jede Akkuzelle nur oder zumindest im Wesentlichen durch die zur elektrisch leitenden Kontaktierung bestimmten Zellverbinder gehalten wird. Auch hier ist demnach wieder eine Doppelfunktion gegeben, nämlich eine elektrisch leitende Kontaktierung und gleichzeitig eine mechanische Halterung der Akkuzellen.

Bei einer nochmals weiteren Ausführungsform des gegenständlichen Akkumulatormoduls fungiert der oder jeder vertikale oder zumindest im Wesentlichen vertikale Abschnitt eines Zellverbinders als Federelement. Durch das bereits erwähnte gestufte Profil und eine Fixierung des horizontalen Abschnitts, zum Beispiel in Form einer Fixierung im oder am Träger, wirkt der oder jeder vertikale Abschnitt und damit jeder Zellverbinder insgesamt als Federelement. Bei einem fixierten horizontalen Abschnitt ist der oder jeder vertikale Abschnitt im Rahmen der Eigenschaften des Materials des Zellverbinders elastisch beweglich. Als Material des Zellverbinders kommt jeder elektrische Leiter in Betracht, also zum Beispiel Kupfer oder dergleichen. Solche Materialen erlauben eine solche elastische Beweglichkeit. Der oder jeder vertikale Abschnitt mit dem daran anschließenden seitlichen Abschnitt ist also federnd elastisch beweglich und diese elastische Beweglichkeit gewährleistet ebenfalls eine sichere elektrisch leitende Kontaktierung der Akkuzellen, vor allem eine gleichzeitige sichere elektrisch leitende Kontaktierung mehrerer Akkuzellen.

Bei einer besonderen Ausführungsform des Akkumulatormoduls umfasst der Träger die zur elektrisch leitenden Kontaktierung der in dem Träger platzierbaren Akkuzellen bestimmten Zellverbinder als integralen Bestandteil, zum Beispiel indem die Zellverbinder bei der Herstellung des Trägers mit dem Material des Trägers (Kunststoff) umspritzt werden. Die Zellverbinder sind dann in dem Träger vibrationssicher integriert. Ein solcher Träger (Hybridbauteil) vereinfacht die Montage eines Akkumulatormoduls erheblich. Der Träger entsteht in einem Produktionsschritt und muss schließlich nur noch mit Akkuzellen bestückt werden. Die Bestückung ist sogar automatisierbar und kann in Form einer gleichzeitigen Bestückung mehrerer oder sämtlicher Akkuzellen erfolgen. Nur mit der Platzierung einer Akkuzelle in einem solchen Träger ist bereits deren elektrisch leitende Verbindung und deren mechanische Halterung in dem Träger abgeschlossen. Weitere Schritte zur elektrisch leitenden Kontaktierung oder zur mechanischen Halterung sind nicht notwendig. Mittels der von dem Träger umfassten Zellverbinder lassen sich hohe Ströme nahezu verlustfrei übertragen und durch die Wahl des Materials der Zellverbinder und/oder die Wahl der Materialstärke der Zellverbinder an die jeweils gegebenen Notwendigkeiten anpassen.

Bei einer weiteren Ausführungsform des gegenständlichen Akkumulatormoduls weist der Träger einen umlaufenden Rand und auf einer von dem Rand begrenzten Fläche regelmäßig beabstandete Zapfen auf, wobei eine Gruppe von Zapfen oder ein Abschnitt des Rands zusammen mit zumindest einem Zapfen Steckplätze zur Platzierung jeweils einer Akkuzelle in dem Träger definieren. Die definierten Steckplätze gewährleisten, dass eine/jede im Träger platzierte Akkuzelle eine Position einnimmt, in der zumindest eine sichere elektrisch leitende Kontaktierung, insbesondere eine sichere elektrisch leitende Kontaktierung und eine sichere mechanische Halterung, gewährleistet ist. Zudem fungieren der Rand und/oder die Zapfen beim Platzieren einer Akkuzelle oder beim gleichzeitigen Platzieren mehrerer Akkuzellen in dem Träger als Führung. Bei einem vertikal oder im Wesentlichen vertikal im Akkumulatormodul eingebauten Träger fungieren der Rand und die Zapfen zudem als Auflageflächen für die Akkuzellen.

Schließlich ist bei einer bevorzugten, optionalen Ausführungsform des gegenständlichen Akkumulatormoduls vorgesehen, dass zumindest eine Seitenfläche des Gehäuses, insbesondere zumindest jede Seitenfläche des Gehäuses, an welche Akkuzellen thermisch angekoppelt sind, außen mit Kühlrippen versehen sind und/oder dass das Gehäuse von einem Fluid durchströmbare Kühlkanäle aufweist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Zum Beispiel kommen anstelle der im Ausführungsbeispiel gezeigten Rundzellen auch Energiespeicherzellen mit einer anderen geometrischen Grundform, zum Beispiel quaderförmige Energiespeicherzellen, in Betracht und entsprechend sind andere mögliche geometrische Grundformen stets mitzulesen. Des Weiteren sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: ein Akkumulatormodul,
- Fig. 2: eine Teilexplosionsdarstellung eines Akkumulatormoduls,
- Fig. 3, 4 und 5: einen zur Aufnahme einer Vielzahl von Ackuzellen bestimmten Träger für ein Akkumulatormodul gemäß Fig. 2,
- Fig. 6, 7: und 8 die hier vorgeschlagene einseitige elektrisch leitende Kontaktierung der Akkuzellen in einem zu deren Aufnahme bestimmten Träger,
- Fig. 9: einen für eine solche einseitige Kontaktierung vorgesehenen Zellverbinder in unterschiedlichen Ansichten,
- Fig. 10: zwei mittels eines Zellverbinders gemäß Fig. 9 elektrisch leitend verbundene Akkuzellen,
- Fig. 11 und 12: den Träger in einer Ansicht von oben mit den darin eingebetteten Zellverbindern,
- Fig. 13: die Gesamtheit aller in einem Träger eingebetteten Zellverbinder ohne den umgebenden Träger,
- Fig. 14: einen mit Akkuzellen vollständig bestückten Träger in einer Draufsicht,
- Fig. 15: ein elektrisches Ersatzschaltbild für den vollständig bestückten Träger gemäß Fig. 14,
- Fig. 16: eine Darstellung zur Illustration einer Wärmeübertragung von den Akkuzellen auf ein Gehäuse des Ackumulatormoduls und
- Fig. 17: einen Ausschnitt aus einer Darstellung mit an der Innenfläche einer Seitenwand des Gehäuses des Akkumulatormoduls anliegenden Akkuzellen-Stirnflächen.

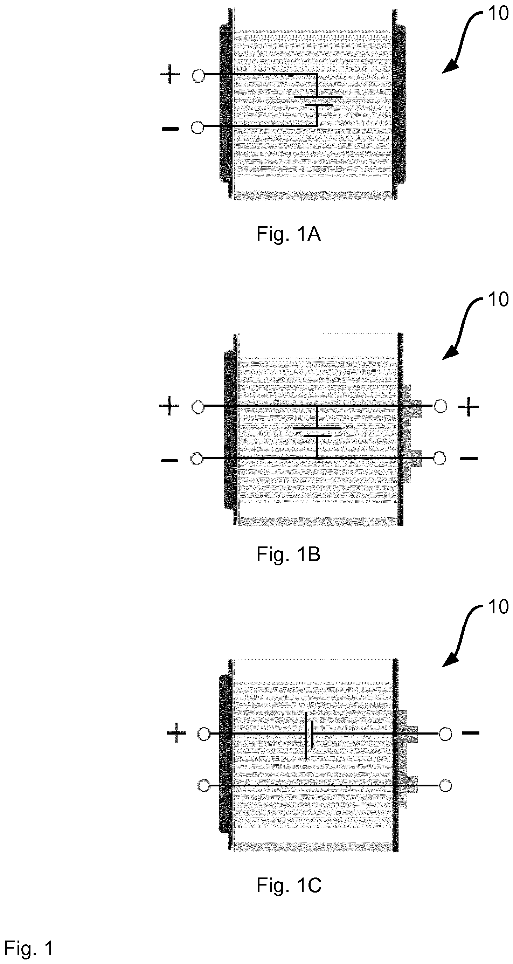

Die Darstellung Die Darstellung in Figur 1 (Figuren 1A, 1B, 1C) zeigt schematisch vereinfacht ein als Energiespeichervorrichtung fungierendes Akkumulatormodul 10. Ein Akkumulatormodul 10 gemäß Figur 1A kann einzeln als Strom- oder Spannungsquelle verwendet werden (im Folgenden wird - soweit nötig - nur noch auf die Eigenschaft des Akkumulatormoduls 10 als Spannungsquelle eingegangen; eine Funktion als Strom- oder allgemein als Energiequelle ist selbstverständlich jeweils mitzulesen) .

Die Besonderheit eines Akkumulatormoduls 10 der hier vorgeschlagenen Art besteht in deren Anreihfähigkeit, wie dies in der parallelen Anmeldung mit dem amtlichen Aktenzeichen (amtliches Aktenzeichen noch nicht bekannt; internes Zeichen 124 002 P WO, Titel: "Akkumulatormodul") beschrieben ist, die zur Vermeidung unnötiger Wiederholungen mit diesem Hinweis in ihrem gesamten Umfang als in diese Beschreibung aufgenommen gelten soll.

Ein Akkumulatormodul 10 gemäß Figur 1A kann zum Beispiel mit einem Akkumulatormodul 10 gemäß Figur 1B oder mit einem Akkumulatormodul 10 gemäß Figur 1C kombiniert werden. Die Akkumulatormodule 10 werden dabei strangartig hintereinander angeordnet, derart, dass eine rückwärtige Seitenfläche eines Ackumulatormoduls 10 einer frontseitigen Seitenfläche eines in dem resultierenden Strang nachfolgenden Akkumulatormoduls 10 zugewandt ist. In einer solchen Kombination bildet das Akkumulatormodul 10 gemäß Figur 1A den Abschluss eines resultierenden Strangs. Die Anzahl in dem Strang vorangehender Akkumulatormodule 10 entweder gemäß Figur 1B oder alternativ gemäß Figur 1C ist grundsätzlich beliebig. Bei einer Zusammenschaltung mehrerer Akkumulatormodule 10 gemäß Figur 1B mit einem abschließenden Akkumulatormodul 10 gemäß Figur 1A ergibt sich eine Parallelschaltung mit dem Ergebnis eines am Eingang des Strangs der miteinander verbundenen Akkumulatormodule 10 abgreifbaren Stroms in Höhe der Summe der von den einzelnen Akkumulatormodulen 10 ausgebbaren Ströme. Bei einer Zusammenschaltung mehrerer Akkumulatormodule 10 gemäß Figur 1C mit einem abschließenden Akkumulatormodul 10 gemäß Figur 1A ergibt sich eine Serienschaltung mit dem Ergebnis einer am Eingang des Strangs der miteinander verbundenen Akkumulatormodule 10 abgreifbaren Spannung in Höhe der Summe der Einzelspannungen jedes einzelnen Akkumulatormoduls 10.

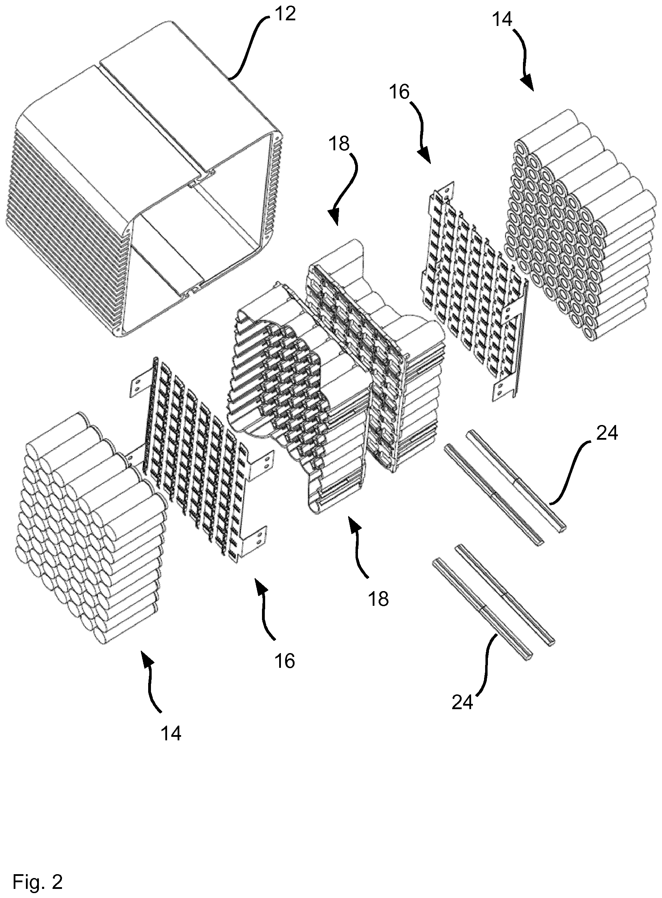

Jedes Akkumulatormodul 10 umfasst ein Gehäuse 12 (Fig. 2), welches die Akkuzellen 14 (Fig. 2) aufnimmt. Die Darstellung in Figur 2 zeigt eine Teilexplosionsdarstellung einer Ausführungsform eines gegenständlichen Akkumulatormoduls 10. Als Gehäuse 12 oder zumindest wesentliches Gehäuseelement fungiert ein Abschnitt eines Strangprofils. Vier Seitenflächen des Gehäuses 12 schließen einen Hohlraum ein, welcher die Ackuzellen 14 aufnimmt. Die offenen Seiten des Gehäuses 12 werden mittels hier nicht gezeigter (front- und rückseitiger) Seitenflächen, die als Front- und Rückseite des Akkumulatormoduls 10 fungieren, geschlossen. Bei einem Akkumulatormodul 10 gemäß Figur 1A sind die Anschlüsse des Akkumulatormoduls 10 zur Frontseite geführt. Bei einem Akkumulatormodul 10 gemäß Figur 1B oder gemäß Figur 1C sind die Anschlüsse des Ackumulatormoduls 10 zum einen zur Frontseite und zum anderen zur Rückseite geführt.

Figur 2 zeigt, dass bei einem gegenständlichen Akkumulatormodul 10 eine Vielzahl von Akkuzellen 14 verwendet und elek¬trisch zusammengefasst wird. Die Akkuzellen 14 sind dabei in zwei Gruppen jeweils matrixartig (nebeneinander und übereinander, also gewissermaßen in Zeilen und Spalten) zusammengefasst. Die Anzahl der in einer solchen Gruppe in einer Zeile zusammengefassten Akkuzellen 14 sowie die Anzahl der Zeilen richtet sich nach der Form und Größe der Akkuzellen 14 sowie dem Innenvolumen des Gehäuses 12, ist aber grundsätzlich beliebig. Bevorzugt sind die Dimensionen (Zeilen, Spalten) beider Gruppen innerhalb eines Akkumulatormoduls 10 identisch.

Die Akkuzellen 14 werden mittels als Zellverbinder 16 fungierender Kontaktelemente elektrisch leitend kontaktiert. Ein Träger 18 nimmt die Akkuzellen 14 und die Zellverbinder 16 auf. Der Träger 18 nimmt die Zellverbinder 16 auf, indem das Material des Trägers 18 abschnittsweise die Zellverbinder 16 umgibt. Der Träger 18 ist ein Hybridbauteil und umfasst die Zellverbinder 16 als integralen Bestandteil. Die Akkuzellen 14 nimmt der Träger 18 an dafür vorgesehenen Steckplätzen auf. Der Träger 18 hält (im Sinne einer Fixierung) die einzelnen Akkuzellen 14 in den durch die Steckplätze vorgegebenen Positionen und fixiert diese in ihrer axialen Orientierung. Zwischen zwei in dem Gehäuse 12 platzierten, bestückten Trägern 18 befindet sich eine nicht gezeigte Zentraleinheit, zum Beispiel eine Zentraleinheit, welche ein grundsätzlich an sich bekanntes Batteriemanagementsystem, eine Strommessstrecke, ein schaltbares Relais und/oder eine Schmelzsicherung umfasst und von der nach außen geführte Anschlusskontakte abgehen.

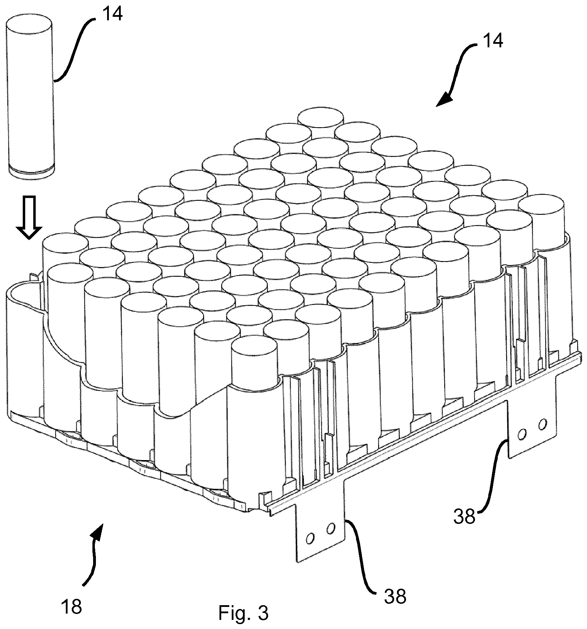

Ein mit Akkuzellen 14 bestückter Träger 18 ist in der Darstellung in Figur 3 gezeigt. Zur Veranschaulichung der Platzierung einer Akkuzelle 14 an ihrem Steckplatz im Träger 18 ist eine Akkuzelle 14 oberhalb des Trägers 18 und oberhalb des zu deren Aufnahme vorgesehenen Steckplatzes gezeigt. Die Akkuzelle 14 wird in den Träger 18 eingesetzt, indem sie entlang der in Figur 3 mittels des Blockpfeils veranschaulichten Richtung bewegt und an dem freien Steckplatz im Träger 18 platziert wird.

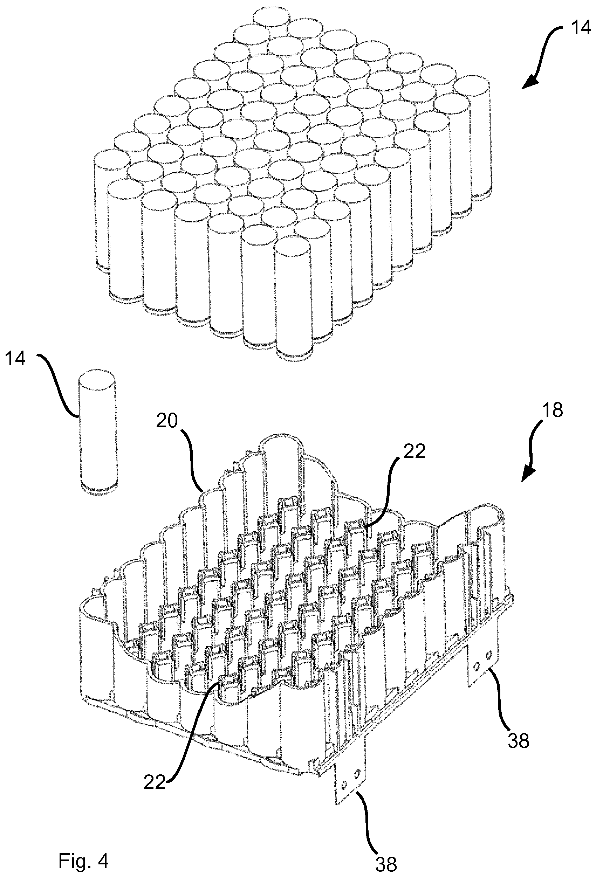

Die Darstellung in Figur 4 zeigt zum einen den Träger 18 (mit den damit integral verbundenen Zellverbindern 16) und zum anderen oberhalb des Trägers 18 die zur Platzierung in dem Träger 18 bestimmten Akkuzellen 14. Die Darstellung in Figur 4 lässt weitere Details des Trägers 18 erkennen. Der Träger 18 weist einen außen umlaufenden Rand 20 und in der von dem Rand 20 begrenzten Fläche regelmäßig beabstandete domartige Zapfen 22 auf. Jeder Zapfen 22 weist vier in Umfangsrichtung des Zapfens 22 regelmäßig beabstandete konkave Flächenabschnitte, nämlich Flächenabschnitte eines Zylindermantels, auf. Der Radius dieser Flächenabschnitte entspricht im Wesentlichen dem Radius einer als Rundzelle ausgeführten Akkuzelle 14. In der Darstellung ist erkennbar, dass in der von dem Rand 20 begrenzten Fläche eine Vielzahl von Zapfen 22 in einer matrixartigen Struktur nebeneinander angeordnet ist. Der Abstand zwischen den Zapfen 22 entspricht im Wesentlichen dem Durchmesser einer als Rundzelle ausgeführten Akkuzelle 14. Jeweils eine Vierergruppe von Zapfen 22 hält (im Sinne einer Fixierung) eine Akkuzelle 14 und fixiert diese in axialer Richtung. Der Rand 20 umfasst eine Mehrzahl von aneinander anschließenden und in Richtung auf die Zapfen 22 konkaven Flächenabschnitten, nämlich Flächenabschnitte eines Zylindermantels. Der Radius dieser Flächenabschnitte entspricht ebenfalls im Wesentlichen dem Radius einer als Rundzelle ausgeführten Akkuzelle 14. Ein solcher Flächenabschnitt hält (im Sinne einer Fixierung) zusammen mit zwei benachbarten Zapfen 22 jeweils eine Akkuzelle 14 und fixiert diese in axialer Richtung. An den vier Ecken des Randes 20 ergibt sich ein konkaver Flächenabschnitt, dessen Radius ebenfalls im Wesentlichen dem Radius einer als Rundzelle ausgeführten Akkuzelle 14 entspricht. Die Bogenlänge dieses Flächenabschnitts ist jedoch länger als die Bogenlänge der bisher erwähnten Flächenabschnitte des Randes 20 und dieser Flächenabschnitt hält (im Sinne einer Fixierung) zusammen mit dem einen benachbarten Zapfen 22 ebenfalls jeweils eine Akkuzelle 14 und fixiert diese in axialer Richtung. Soweit in diesem Absatz eine Größe (Radius, Durchmesser) durch die Konkretisierung mit "im Wesentlichen" spezifiziert wurde, versteht sich, dass damit gemeint ist, dass zum Beispiel der Radius der Flächenabschnitte der Zapfen 22 geringfügig größer ist als der Radius der Ackuzelle 14, sodass eine formschlüssige Flächenpassung möglich ist.

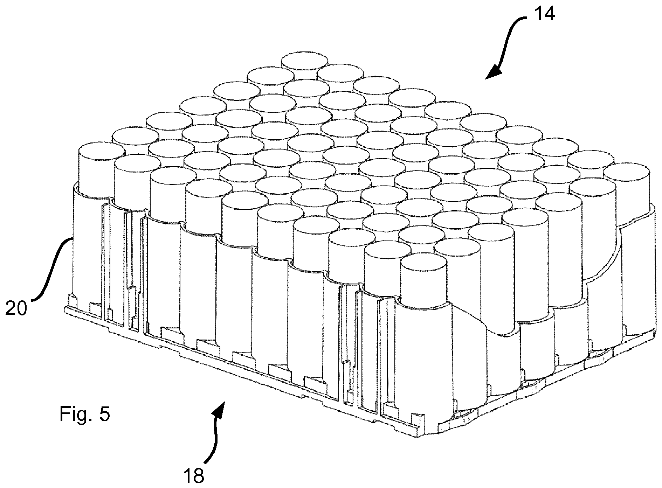

Die Darstellung in Figur 5 zeigt den Träger 18 gemäß Figur 3 und Figur 4 aus einer anderen Perspektive und mit darin platzierten Akkuzellen 14. In dieser vollständig bestückten Konfiguration werden je zwei Träger 18 in das Gehäuse 12 (Fig. 2) geschoben und im in das Gehäuse 12 eingeführten Zustand mittels zumindest eines zwischen die Träger 18 einführbaren und als Spreizelement fungierenden Distanzstücks 24 (Figur 2) im Gehäuse 12 fixiert, und zwar bevorzugt in einer Art und Weise, bei der die freien Oberseiten/freien Stirnseiten/freien Stirnflächen der in die Träger 18 eingesetzten Ackuzellen 14 zur Wärmeabfuhr an das Gehäuse 12 an der Innenoberfläche des Gehäuses 12 anliegen.

Die Träger 18 sind so dimensioniert, dass sie gerade in das Gehäuse 12 passen. Im eingeschobenen Zustand ist der jeweilige Träger 18 damit bereits in gewissem Umfang im Gehäuse 12 fixiert. Bei einem Gehäuse 12 gemäß Figur 2, also einem Gehäuse 12 mit einem nach innen weisenden T-Profil, bestimmt das T-Profil einen minimalen Abstand zwischen den Trägern 18 und werden die Distanzstücke 24 unter jeweils einen Schenkel des T-Profils und somit zwischen das T-Profil und den jeweils angrenzenden Träger 18 geschoben. Die Distanzstücke 24 werden beim Einführen durch das T-Profil geführt. Die Distanzstücke 24 sind leicht keilförmig, nehmen also entlang ihrer Längsachse in ihrer wirksamen (in Spreizrichtung wirksamen) Breite zu und bewirken so eine Verlagerung des jeweiligen Trägers 18 in Richtung auf die nächstliegende Seitenfläche des Gehäuses 12 sowie schließlich die Fixierung des Trägers 18 im Gehäuse 12.

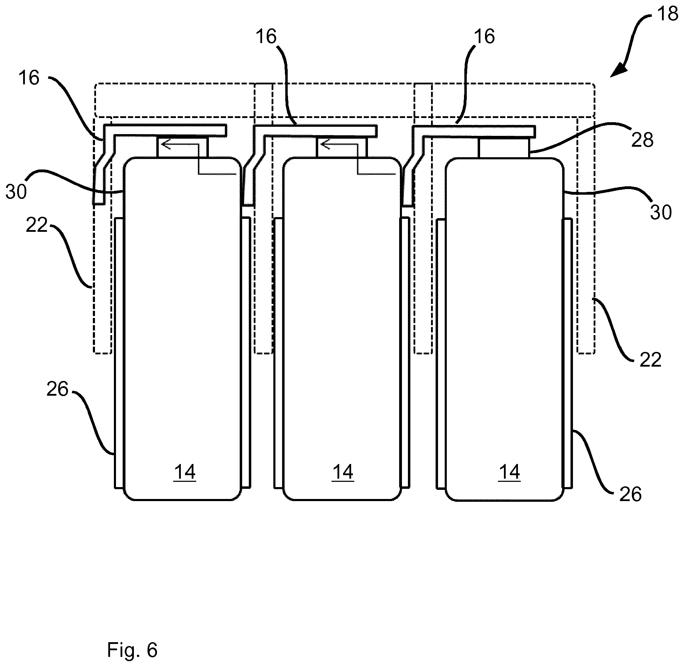

Die Darstellung in Figur 6 zeigt nunmehr Details der elektrischen Kontaktierung der in einen Träger 18 eingesetzten Ackuzellen 14. Zwischen den Akkuzellen 14 sind noch Teile der Zapfen 22 des Trägers 18 erkennbar. Wesentlich für die hier vorgeschlagene elektrische Kontaktierung der Akkuzellen 14 ist, dass sich eine Isolierung 26 nur über einen Teil der Gesamthöhe der Akkuzellen 14 erstreckt.

Bekanntlich werden Akkuzellen 14 in einer üblichen Konfiguration als Rundzellen oder dergleichen an den beiden Enden (Stirnflächen) kontaktiert, nämlich zum einen an dem über eine der beiden Stirnflächen hinausragenden zentralen Mittelkontakt 28 und zum anderen an der gegenüberliegenden Stirnfläche, wobei an dieser gegenüberliegenden Stirnfläche die Isolierung 26 ausgespart ist und damit dort die metallische Ummantelung, die in ihrer Gesamtheit neben dem als ersten Kontakt fungierenden Mittelkontakt 28 den zweiten Kontakt der Akkuzelle 14 darstellt, freiliegt. Anstelle einer solchen bisher üblichen Kontaktierung (beidseitige Kontaktierung) erfolgt nach dem hier vorgeschlagenen Ansatz die Kontaktierung der Akkuzellen 14 ausschließlich von einer Seite. Somit steht die bisher ebenfalls kontaktierte gegenüberliegende Seite zum Beispiel und grundsätzlich optional zur Wärmeabführung zur Verfügung.

Die nach dem hier vorgeschlagenen Ansatz erfolgende einseitige Kontaktierung der Akkuzellen basiert auf einer Verwendung speziell geformter Zellverbinder 16, die zum einen den Mittelkontakt 28 zumindest einer ersten Akkuzelle 14 und zum anderen einen von Isolierung 26 freien Bereich der Mantelfläche 30 zumindest einer benachbarten weiteren Akkuzelle 14 kontaktieren. Die Kontaktierung einer Mehrzahl von Akkuzellen 14 verläuft also von der Deckelfläche einer Akkuzelle 14 und dem dortigen Mittelkontakt 28 zu einer Seitenfläche einer weiteren Akkuzelle 14 und einem dortigen von Isolierung 26 freien Bereich der Mantelfläche 30. Die Darstellung in Figur 6 zeigt diese Form der Kontaktierung am Beispiel von drei Akkuzellen 14. Auf Basis der Darstellung ist ohne Weiteres vorstellbar, dass sich rechts und links an die gezeigten drei Akkuzellen 14 weitere Akkuzellen 14 anschließen können. Darüber hinaus ist ebenso ohne Weiteres 14 vorstellbar, dass sich vor und hinter den gezeigten drei Akkuzellen 14 weitere Akkuzellen 14 befinden können, die mittels eines langgestreckten, sich quer zur Blattebene erstreckenden Zellverbinders 16 kontaktierbar sind. Dann ergibt sich die bereits erwähnte matrixartige Anordnung der Akkuzellen 14 und diese sind sämtlich in der beschriebenen Art einseitig kontaktiert.

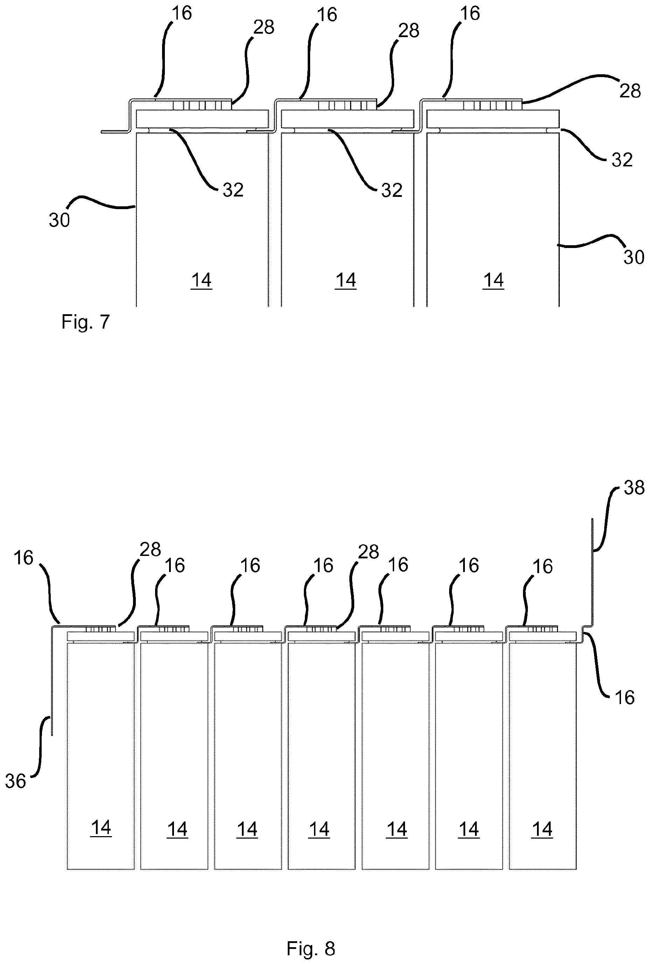

Die Darstellung in Figur 6 ist eine schematisch vereinfachte Darstellung des Grundprinzips der einseitigen Kontaktierung der Akkuzellen 14. Die Darstellung zeigt eine mögliche Ausführungsform der Zellverbinder 16. Die Darstellung in Figur 7 zeigt eine bevorzugte konkrete Ausführungsform der Zellver¬binder 16. Grundsätzlich kontaktiert jeder Zellverbinder 16 einerseits den Mittelkontakt 28 zumindest einer Akkuzelle 14 und andererseits die Mantelfläche 30 zumindest einer benach-barten Akkuzelle 14. Bei der Ausführungsform gemäß Figur 7 erfolgt die Kontaktierung der Mantelfläche 30 im Bereich einer Einschnürung 32 in der Mantelfläche 30. Das zur Kontaktierung der Mantelfläche 30 vorgesehene Ende des Zellverbinders 16 greift in diese Einschnürung 32 ein und dieser Eingriff bewirkt zum einen eine sichere elektrisch leitende Kontaktierung der jeweiligen Akkuzelle 14 und zum anderen auch eine (rastende) axiale Fixierung der jeweiligen Akkuzelle 14.

Die Darstellung in Figur 8 zeigt eine Seitenansicht einer Gruppe von Akkuzellen 14 wie in Figur 3 oder Figur 4, also einer Gruppe von Akkuzellen 14, die gemeinsam in einem Träger 18 platzierbar sind. Dabei sei darauf hingewiesen, dass die in Figur 8 gezeigte Gruppe von Akkuzellen 14 genau sieben Ackuzellen 14 umfasst. Gemäß Figur 3 und Figur 4 sind in dem Träger 18 sieben mal zehn Akkuzellen 14 platzierbar. Die in Figur 8 gezeigte Gruppe ist folglich eine der Siebenerreihen in dem Träger 18. Bei einem größer oder kleiner dimensionierten Träger 18 sind selbstverständlich andere Zahlenwerte möglich und die hier erwähnten Zahlenwerte sowie dargestellten Anzahlen sind ausdrücklich nur beispielhaft.

Die Akkuzellen 14 in einer Gruppe gemäß Figur 8 sind auf die in Figur 7 gezeigte Art und Weise miteinander verbunden und entsprechend kann die Darstellung in Figur 7 als Ausschnittsvergrößerung der Darstellung in Figur 8 aufgefasst werden. Die elektrisch leitende Verbindung der Gruppe von Akkuzellen 14 (weitere Akkuzellen 14 befinden sich quer zur Blattebene hinter den gezeigten Akkuzellen 14) wird komplettiert mittels zweier spezieller Zellverbinder 16, die als erster und als letzter Zellverbinder 16 fungieren und endständige Anschlussfahnen 36, 38 (erste Anschlussfahnen 36, zweite Anschlussfahnen 38) aufweisen, die auch bereits in den Darstellungen in Figur 2, Figur 3 und Figur 4 gezeigt, in Figur 2 aber nicht bezeichnet sind. Diese speziellen Zellverbinder 16 kontaktieren nur jeweils eine Reihe (Gruppe) von Akkuzellen 14, nämlich der in Figur 8 rechts gezeigte spezielle Zellverbinder 16, indem dieser in die Einschnürung 32 in den Mantelflächen 30 der Akkuzellen 14 eingreift, und der in Figur 8 links gezeigte spezielle Zellverbinder 16, indem dieser die Mittelkontakte 28 der Akkuzellen 14 kontaktiert. Die zuvor beschriebenen Zellverbinder 16 (Fig. 7) befinden sich zwischen diesen beiden speziellen Zellverbindern 16 und kontaktieren im Unterschied zu diesen jeweils zwei (räumlich) parallele, benachbarte Reihen (Gruppen) von Akkuzellen 14. Die ersten Anschlussfahnen 36 sind unmittelbar oder mittelbar (zum Beispiel über die Zentraleinheit) mit jeweils einem nach außen geführten Anschlusskontakt des Akkumulatormoduls 10 verbunden. Die zweiten Anschlussfahnen 38 dienen zur seriellen Verbindung der Träger 18 und der davon umfassten Akkuzellen 14.

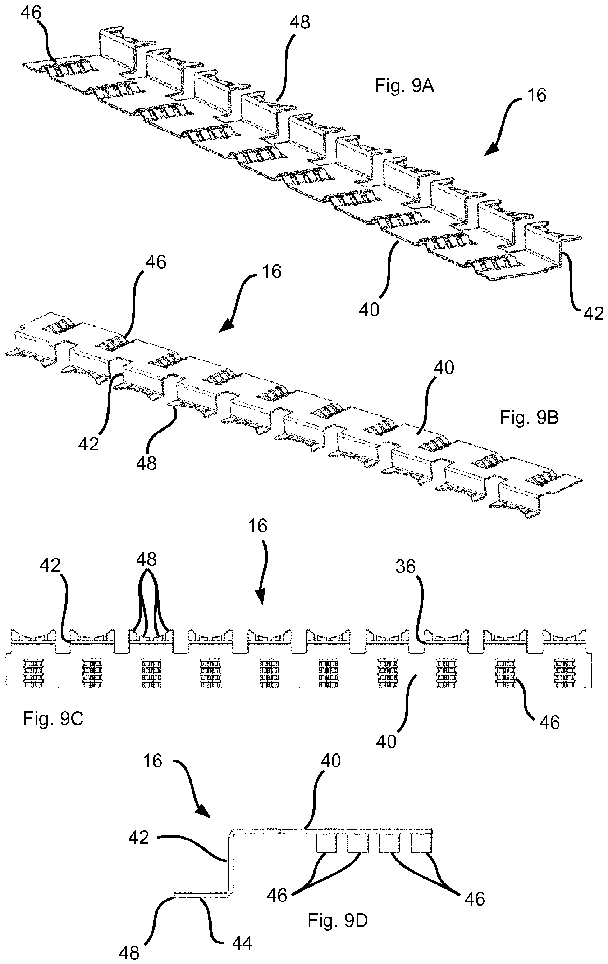

Die Darstellung in Figur 9 (Figuren 9A, 9B, 9C und 9D) zeigen einen solchen langgestreckten Zellverbinder 16 in unterschiedlichen Ansichten. Speziell in der Draufsicht auf eine der Stirnseiten des Zellverbinders 16 in der Darstellung in Figur 9D (Blickrichtung parallel zur Längsachse des Zellver¬binders 16) ist die bereits in Figur 6, Figur 7 und Figur 8 gezeigte winklige Ausführung und das Stufenprofil des Zellverbinders 16 erkennbar. Danach umfasst ein Zellverbinder 16 drei Abschnitte, die zwecks einer einfachen Benennung als horizontaler Abschnitt 40, vertikaler Abschnitt 42 und seitlicher Abschnitt 44 bezeichnet werden. Mittels des horizontalen Abschnitts 40 erfolgt eine Kontaktierung der Mittelkontakte 28 von räumlich in einer Reihe angeordneten und durch die räumliche Anordnung in einer Reihe zu einer Gruppe zusammengefassten Akkuzellen 14. Mittels des seitlichen Abschnitts 44 erfolgt eine Kontaktierung der Mantelflächen 30 von den in einer räumlich parallelen Reihe angeordneten und durch die Anordnung in einer Reihe ebenfalls zu einer Gruppe zusammengefassten weiteren Akkuzellen 14. Der seitliche Abschnitt 44 kann auch als eine Zusammenfassung mehrerer seitlicher Abschnitte 44 in einer Ebene aufgefasst werden, wobei jeder einzelne seitliche Abschnitt 44 zur Kontaktierung einer Ackuzelle 14 bestimmt ist. Bei der gezeigten Ausführungsform (siehe speziell die Darstellungen in Figur 9A und 9B) schließt jeder derartige seitliche Abschnitt 44 an einen eigenen vertikalen Abschnitt 42 an, sodass der Zellverbinder 16 in der gezeigten Ausführungsform einstückig neben dem langgestreckten horizontalen Abschnitt 40 mehrere davon ausgehende und regelmäßig beabstandete vertikale Abschnitte 42 und jeweils daran anschließende seitliche Abschnitte 44 umfasst. Jeder Zellverbinder 16 ist im oder am Träger 18 fixiert, zum Beispiel indem der horizontale Abschnitt 40 jedes Zellverbinders 16 mit dem Material des Trägers 18 bei dessen Herstellung umspritzt wird.

Bei der gezeigten Ausführungsform umfasst der horizontale Abschnitt 40 acht paarweise angeordnete, einander mit ihren freien Ende zugewandte, federnde und abgewinkelte Kontaktzungen 46, wobei grundsätzlich auch mehr oder weniger Kontaktzungen 46 in Betracht kommen und auch die paarweise Anordnung nur eine spezielle Ausführungsform darstellt. Die gezeigte Ausführungsform mit parallel ausgerichteten Kontaktzungen 46 zeichnet sich jedoch durch eine einfache Herstellbarkeit aus. Die freien Enden der oder jeder Kontaktzunge 46 liegen auf einem kontaktierten Mittelkontakt 28 einer Akkuzelle 14 auf oder der Mittelkontakt 28 einer Akkuzelle 14 liegt auf den freien Enden der oder jeder Kontaktzunge 46 auf. Die Mehrzahl der Kontaktzungen 46 stellt sicher, dass zum Beispiel auch bei einer oder sogar mehreren beschädigten Kontaktzungen 46 die restlichen Kontaktzungen 46 noch eine sichere elektrisch leitende Verbindung herstellen. Zudem stellt jede einzelne am Mittelkontakt 28 anliegende Kontaktzunge 46 einen elektrisch leitenden Kontakt mit der Akkuzelle 14 her, sodass sich eine Mehrzahl gleichzeitig wirksamer Kontakte ergibt. Damit ist eine sichere elektrisch leitende Kontaktierung des Mittelkontakts 28 mit einem möglichst geringen Übergangswiderstand gewährleistet.

Jeder seitliche Abschnitt 44 endet in zumindest einer Kontaktfahne 48. Die Kontaktfahnen 48 sind besonders gut in der Darstellung in Figur 9C erkennbar, die eine Draufsicht auf den Zellverbinder 16 zeigt. Bei der gezeigten Ausführungsform sind zur Kontaktierung jeweils einer Akkuzelle 14 vier parallel ausgerichtete Kontaktfahnen 48 vorgesehen und bilden zusammen eine Gruppe von Kontaktfahnen 48. Mehr oder weniger als vier Kontaktfahnen 48 sind grundsätzlich ebenso möglich. Die jeweils zu einer Gruppe gehörigen Kontaktfahnen 48 sind erkennbar unterschiedlich lang. Zwei äußere, lange Kontaktfahnen 48 schließen zwei innere, kürzere Kontaktfahnen 48 ein. Die Enden der Kontaktfahnen 48 einer Gruppe beschreiben zusammen einen Kreisbogen und der Radius des Kreisbogens entspricht dem Radius einer als Rundzelle ausgeführten Akkuzelle 14 oder entspricht - im Sinne der oben skizzierten Lesart - zumindest im Wesentlichen dem Radius einer als Rundzelle ausgeführten Akkuzelle 14.

Mit den Kontaktfahnen 48 greift der Zellverbinder 16 bei einer Ausführungsform gemäß Figur 9 in die Einschnürung 32 der Mantelflächen 30 der Akkuzellen 14 ein und die erwähnte Kreisbogenform gewährleistet, dass jede einzelne Kontaktfahne 48 in die Einschnürung 32 eingreift. Auch hier stellt die Mehrzahl der Kontaktfahnen 48 sicher, dass zum Beispiel auch bei einer oder sogar mehreren beschädigten Kontaktfahnen 48 die restlichen Kontaktfahnen 48 noch eine sichere elektrisch leitende Verbindung herstellen. Zudem stellt jede einzelne in die Einschnürung 32 eingreifende und/oder an der Mantelfläche 30 der Akkuzelle 14 anliegende Kontaktfahne 48 einen elektrisch leitenden Kontakt mit der Akkuzelle 14 her, sodass sich eine Mehrzahl gleichzeitig wirksamer Kontakte ergibt. Auch hier ist damit eine sichere elektrisch leitende Kontaktierung der Mantelfläche 30 der Akkuzelle 14 mit einem möglichst geringen Übergangswiderstand gewährleistet.

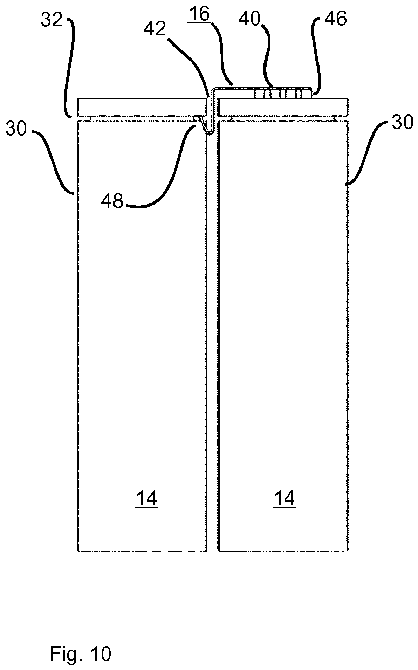

Das Eingreifen in die Einschnürung 32 wird durch die im Rahmen der Materialeigenschaften des Zellverbinders 16 gegebene elastische Verformbarkeit der Kontaktfahnen 48 ermöglicht/erleichtert. Darüber hinaus wirkt bei einer speziellen Ausführungsform auch der vertikale Abschnitt 42 mit dessen im Rahmen der Materialeigenschaften des Zellverbinders 16 gegebener elastischer Verformbarkeit als Federelement. Der Zellverbinder 16 ist zumindest aus einem elektrisch leitenden Werkstoff gefertigt, zum Beispiel aus Kupfer oder Kupferlegierungen. Beim Einsetzen einer Akkuzelle 14 in den Träger 18 kommen die Kontaktfahnen 48 zunächst mit der allgemeinen Mantelfläche 30 der Akkuzelle 14 in Kontakt. Durch ein Umbiegen der Kontaktfahnen 48 und/oder ein Zurückbiegen des vertikalen Abschnitts 42 in Richtung auf den horizontalen Abschnitt 40 können die Kontaktfahnen 48 ausweichen und gleiten beim weiteren Einführen der Akkuzelle 14 in den Träger 18 an der Mantelfläche 30 der Akkuzelle 14 entlang. Beim noch weiteren Einführen der Akkuzelle 14 in den Träger 18 gelangen die Kontaktfahnen 48 schließlich in den Bereich der Einschnürung 32 und tauchen in diese ein. Dies ist in der Darstellung in Figur 10 am Beispiel zweier Akkuzellen 14 und eines diese verbindenden Zellverbinders 16 gezeigt. Die Kontaktfahnen 48 sind im Zuge der Einführung der links gezeigten Akkuzelle 14 in axialer Richtung in den (nicht gezeigten) Träger 18 in der Einführungsrichtung umgebogen. Der horizontale Abschnitt 40 und der vertikale Abschnitt 42 des Zellverbinders 16 sind fest mit dem Träger 18 verbunden, also zum Beispiel von dem Material des Trägers 18 umgeben. Bei einer entsprechenden axialen Position der Akkuzelle 14 greifen die Enden der Kontaktfahnen 48 in die Einschnürung 32 ein. Dort liegen die Kontaktfahnen 48 zumindest auf einer Kante der Einschnürung 32 (in der Darstellung auf der unteren Kante der Einschnürung 32) an und an dieser Stelle ergibt sich ein elektrisch leitender Kontakt mit der Mantelfläche 30 der Akkuzelle 14. Regelmäßig liegen auch die Enden der Kontaktfahnen 48 an einer die Einschnürung 32 begrenzenden Fläche (in der Darstellung an der oberen horizontalen, die Einschnürung 32 begrenzenden Fläche) an. An dieser Stelle ergibt sich ein weiterer elektrisch leitender Kontakt mit der Mantelfläche 30 der Ackuzelle 14.

Im Falle eines federnden vertikalen Abschnitts 42federt dieser zurück, wenn die Kontaktfahnen 48 in die Einschnürung 32 eingreifen. Unabhängig von einer optionalen federnden Eigenschaft des vertikalen Abschnitts 42 ist eine Akkuzelle 14 mittels der Kontaktfahnen 48 einerseits sicher elektrisch leitend kontaktiert und andererseits mittels derselben Kontaktfahnen 48 lösbar im Träger 18 verrastet. Für das Entnehmen einer Akkuzelle 14 aus dem Träger 18 gilt der zuvor beschriebene Ablauf entsprechend umgekehrt. Beim Entnehmen muss zunächst die rastende Arretierung mittels der Kontaktfahnen 48 gelöst werden und dafür entsprechende Kraft aufgewandt werden, sodass gewährleistet ist, dass sich eine im Träger 18 verrastete Akkuzelle 14 nicht unbeabsichtigt löst.

Die durch die Länge des vertikalen Abschnitts 42 bestimmte Höhe eines Zellverbinders 16 ist zusammen mit der Position der Einschnürung 32 in der Mantelfläche 30 der Akkuzellen 14 so gewählt, dass dann, wenn die Kontaktfahnen 48 in die Einschnürungen 32 einer ersten Reihe von Akkuzellen 14 eingreifen, die Kontaktzungen 46 unter mechanischer Spannung auf den Mittelkontakten 28 einer angrenzenden zweiten Reihe von Ackuzellen 14 aufliegen. Jede einzelne Akkuzelle 14 ist im in den Träger 18 eingesetzten Zustand damit gleichsam zwischen den Kontaktzungen 46 eines Zellverbinders 16 und den Kontaktfahnen 48 des benachbarten Zellverbinders 16 eingespannt. Dies gewährleistet neben der bereits erwähnten sicheren mechanischen Halterung sowie lösbaren Verrastung im Träger 18 vor allem auch eine sichere und dauerhafte elektrisch leitende Kontaktierung jeder Akkuzelle 14.

Bei den beiden oben im Zusammenhang mit der Erläuterung der Darstellung in Figur 8 erwähnten speziellen Zellverbindern 16 handelt es sich im Grunde im Wesentlichen um einen entlang seiner Längsachse geteilten Zellverbinder 16 mit seitlichen Anschlussfahnen 36, 38. Einer dieser speziellen Zellverbinder 16 (Figur 8, rechts) umfasst die Kontaktfahnen 48 - oder allgemein Mittel zur Kontaktierung einer Gruppe von Akkuzellen 14 an deren Mantelflächen 30, insbesondere in Einschnürungen 32 in den Mantelflächen 30. Der andere spezielle Zellverbinder 16 (Figur 8, links) umfasst die Kontaktzungen 46 - oder allgemein Mittel zur Kontaktierung einer Gruppe von Akkuzellen 14 an deren Stirnflächen, insbesondere deren Mittelkontakten 28.

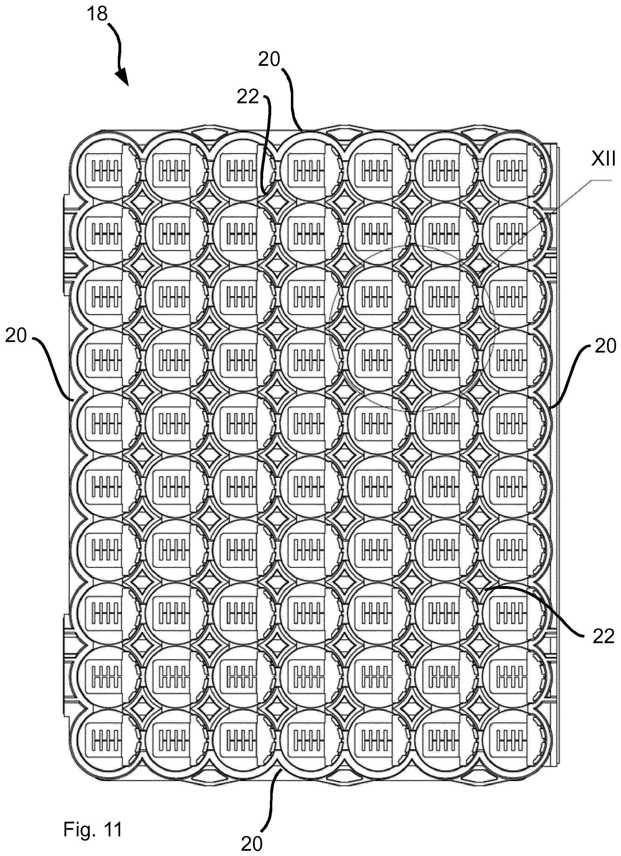

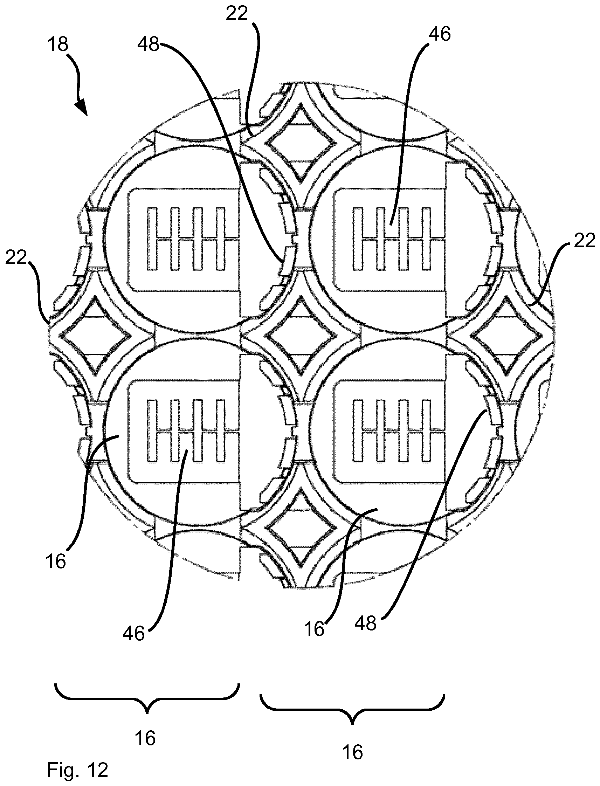

Die Darstellungen in Figur 11 und Figur 12 (Figur 12 als Ausschnittsvergrößerung von Figur 11) zeigen den Träger 18 mit den davon umfassten (darin eingebetteten) Zellverbindern 16 in einer Draufsicht. Der umlaufende Rand 20 ist erkennbar, genauso wie die regelmäßig beabstandeten Zapfen 22. Am Grund der zwischen den Zapfen 22 oder zwischen den Zapfen 22 und dem Rand 20 freibleibenden Kanäle zur Aufnahme jeweils einer Akkuzelle 14 sind die Kontaktzungen 46 und die Kontaktfahnen 48 der Zellverbinder 16 erkennbar (siehe vor allem die vergrößerte Darstellung in Figur 12). Die geschweiften Klammern im unteren Bereich der Darstellung in Figur 12 zeigen die Breite jeweils eines Zellverbinders 16, sodass deutlich wird, dass ein Zellverbinder 16 einerseits die in einer Reihe angeordneten Aufnahmepositionen für jeweils eine Akkuzelle 14 im Träger 18 überdeckt und anderseits bis zu den Aufnahmepositionen einer in dem Träger 18 benachbarten Reihe reicht.

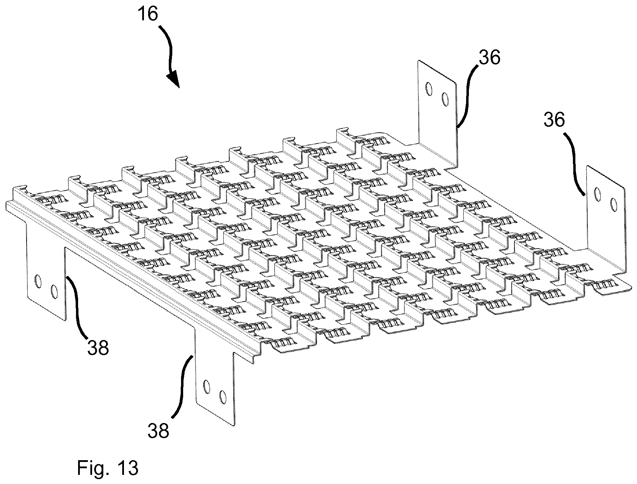

Figur 13 zeigt nochmals (wie in Fig. 2) die Gesamtheit der zu einem Träger 18 gehörenden Zellverbinder 16 mit den äußeren speziellen Zellverbindern 16 und deren Anschlussfahnen 36, 38 sowie die von den speziellen Zellverbindern 16 eingeschlossenen Zellverbinder 16. Man erkennt, dass die zu einem Träger 18 gehörenden Zellverbinder 16 regelmäßig beabstandet und räumlich parallel zueinander ausgerichtet sind.

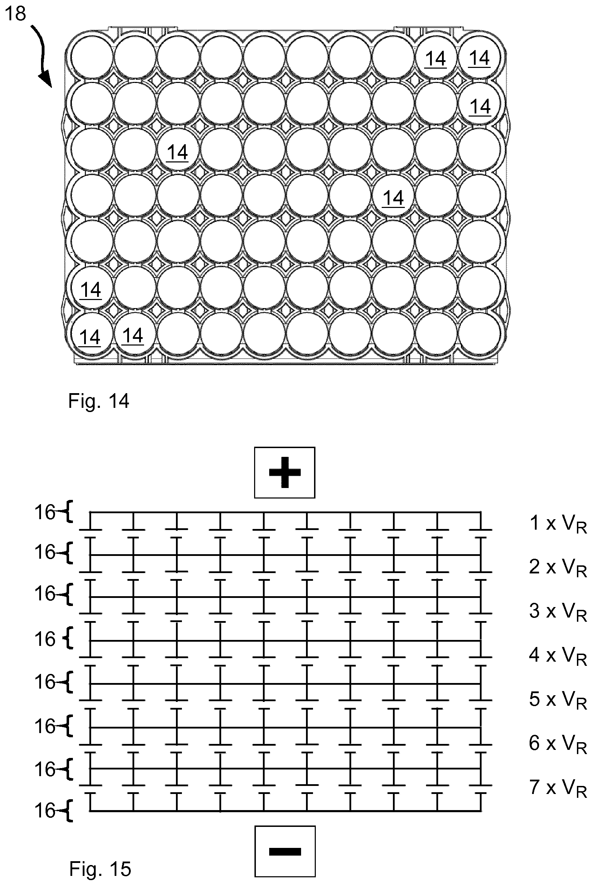

Schließlich zeigen die Figuren 14 und 15 einen mit Akkuzellen 14 vollständig bestückten Träger 18 bzw. das Schaltbild eine solchen Trägers 18 mit den davon umfassten, durch das entsprechende Schaltzeichen dargestellten Akkuzellen 14 sowie der aufgrund der Zellverbinder 16 resultierenden Zusammenschaltung der Akkuzellen 14. Auch hier sind wieder - analog zu der Darstellung in Figur 12 - die Bereiche der Zellverbinder 16 mit geschweiften Klammern bezeichnet. Rechts neben dem Schaltplan ist durch den Text "1 x VR", "2 x VR" usw. gezeigt, dass sich die an einem vollständig bestückten Träger 18 abgreifbare Spannung mit jeder Reihe von Akkuzellen 14 erhöht, wobei VR die aufgrund der Parallelschaltung mehrerer Akkuzellen 14 (hier exemplarisch zehn Akkuzellen 14) in einer Reihe über einer solchen Reihe resultierende Spannung bezeichnet.

Nunmehr wendet sich die Beschreibung des Ausführungsbeispiels dem Aspekt der Wärmeabfuhr zu. Bei einer Nutzung der in einer galvanischen Zelle gespeicherten elektrischen Energie kommt es bekanntlich aufgrund des Innenwiderstands zu einer Zellerwärmung. Eine erhöhte oder steigende Umgebungstemperatur beschleunigt (unerwünschte Nebenreaktionen und somit) das Alterungsverhalten einer Akkuzelle 14. Dies gilt auch für die Ackuzellen 14 des hier vorgeschlagenen Akkumulatormoduls 10. Zudem hängt die Geschwindigkeit der Selbstentladung eine Ackuzelle 14 unter anderem von der Temperatur ab. Deshalb ist eine effiziente Entwärmung des Akkumulatormoduls 10 sinnvoll. Umgekehrt sind auch niedrige Umgebungstemperaturen, insbesondere Temperaturen unterhalb des Gefrierpunkts von Wasser, in ähnlicher Weise ungünstig, sodass auch eine Erwärmung des Ackumulatormoduls 10, insgesamt also eine temperaturabhängige Temperaturanpassung des Akkumulatormoduls 10 sinnvoll ist.

In der Teilexplosionsdarstellung gemäß Figur 2 ist bereits erkennbar, dass die nicht kontaktierten Stirnflächen der jeweils in einem Träger 18 platzierten Akkuzellen 14 der Innenseite einer Seitenfläche des Gehäuses 12 zugewandt sind. Aufgrund der zuvor beschriebenen einseitigen Kontaktierung der Akkuzellen 14 sind die den Stirnflächen mit dem Mittelkontakt 28 gegenüberliegenden Stirnflächen sämtlicher in einem Träger 18 platzierten Akkuzellen 14 frei und stehen für eine effiziente Wärmeabfuhr zur Verfügung. Diese Stirnflächen der Ackuzellen 14 sind bauartspezifisch metallisch, denn üblicherweise werden diese Stirnflächen neben dem Mittelkontakt 28 als zweiter Kontakt beim Anschluss einer Akkuzelle 14 verwendet. Die metallischen Stirnflächen erlauben auch eine effiziente Wärmeübertragung. Die Gesamtheit der metallischen Stirnflächen aller in einem Träger 18 zusammengefassten Akkuzellen 14 ist besonders gut auch in den Darstellungen in Figur 3, Figur 4 und Figur 5 erkennbar. Dort wird auch deutlich, dass die genannten Stirnflächen aller in einem Träger 18 zusammengefassten Akkuzellen 14 miteinander fluchten. Alle Stirnflächen liegen also in der gleichen Ebene oder zumindest im Wesentlichen in der gleichen Ebene.

Die Wärmeübertragung erfolgt, indem alle in einem Träger 18 platzierten Akkuzellen 14 mit ihren zuvor genannten Stirnflächen an der Innenseite einer Seitenfläche des Gehäuses 12 anliegen, sodass eine Wärmeübertragung auf das Gehäuse 12 stattfindet. In dem Material des Gehäuses 12 findet entsprechend der physikalischen Gesetzmäßigkeiten eine Wärmeleitung statt, sodass sich die Außenoberfläche des Gehäuses 12 erwärmt. Diese Wärme wird - ebenfalls entsprechend der physikalischen Gesetzmäßigkeiten - durch Konvektion an die Umgebung abgegeben. Die Wärmeabgabe kann in grundsätzlich an sich bekannter Art und Weise durch Erhöhung der wirksamen Oberfläche des Gehäuses 12 erhöht werden und entsprechend weist das Gehäuse 12 optional auf der Außenoberfläche zumindest einzelner Seitenflächen Rippen oder dergleichen, jedenfalls oberflächenvergrößernde Elemente auf.

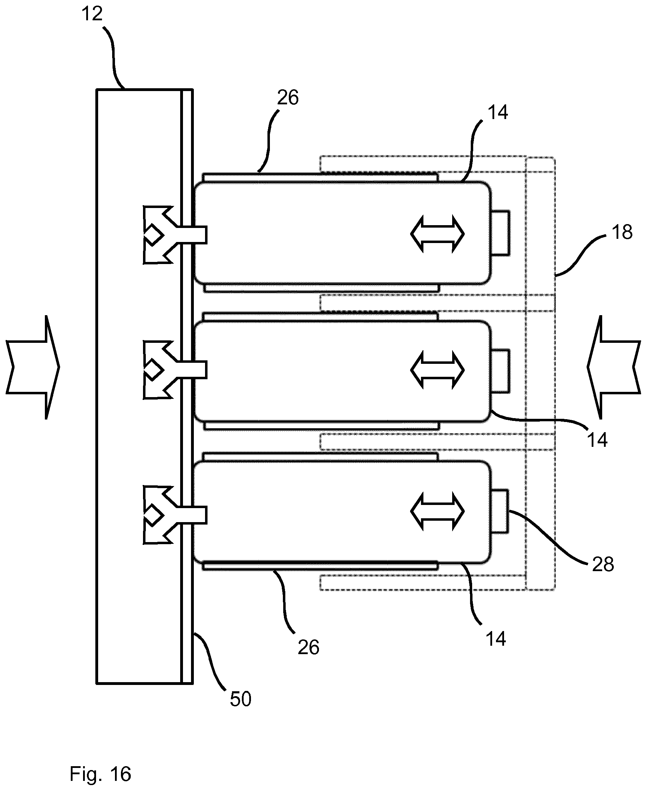

Die Darstellung in Figur 16 zeigt eine Darstellung ähnlich der Darstellung in Figur 6, wobei hier auf eine Darstellung der einseitigen Kontaktierung, die bei der Darstellung in Figur 6 im Vordergrund steht, verzichtet wurde. Die einseitige Kontaktierung, insbesondere die einseitige Kontaktierung gemäß Figur 6, Figur 7 oder Figur 8, ist aber gleichwohl vorhanden, sodass zur Vermeidung unnötiger Wiederholungen auf die entsprechende vorangehende Beschreibung verwiesen wird.

Genau wie bei der Darstellung in Figur 6 sind mehrere in einem Träger 18 platzierte Akkuzellen 14 gezeigt. Die Akkuzellen 14 sind in dem Träger 18 oder mittels des Trägers 18 axial fixiert, insbesondere mittels der zuvor beschriebenen einseitigen Kontaktierung. Die Akkuzellen 14 sind entlang ihrer Längsachsen untereinander parallel ausgerichtet. Bei einem Träger 18 entsprechend der hier beschriebenen Ausführungsform wird diese parallele Ausrichtung der nur einseitig gehaltenen Akkuzellen 14 durch eine lange Führung mittels der Zapfen 22 und/oder des Rands 20 des Trägers 18 erreicht. Um eine lange Führung handelt es sich dabei, weil die als Auflagefläche wirksame Länge der Zapfen 22 und/oder des Rands 20 zumindest etwa einem Drittel der Länge der Akkuzellen 14 entspricht, wobei eine Ausführungsform mit einer größeren wirksamen Länge ebenfalls möglich ist.

Die freien Enden der einseitig kontaktierten Akkuzellen 14 des oder eines Trägers 18 ragen über den Träger 18 hinaus und die dortigen Stirnflächen weisen allesamt in dieselbe Richtung, nämlich in Richtung auf eine Innenoberfläche einer Seitenwand des Gehäuses 12. Die Stirnflächen sind ebenfalls untereinander parallel und parallel zur Innenoberfläche des Gehäuses 12. Alle Stirnflächen befinden sich in einer Ebene oder zumindest im Wesentlichen in einer Ebene. Die Akkuzellen 14 liegen mit diesen Stirnflächen entweder direkt an der Innenoberfläche des Gehäuses 12 oder indirekt an der Innenoberfläche des Gehäuses 12 an einem flächig auf der Innenoberfläche des Gehäuses 12 angebrachten elektrischen Isolator 50 an. Bei dem Isolator 50 handelt es sich optional um einen hochwärmeleitfähigen Isolator 50, zum Beispiel einen Isolator 50 in Form einer Acrylfolie oder einer Folie aus Aluminiumoxyd. Bei einer solchen Folie handelt es sich zum Beispiel um eine Folie mit geringer Dicke, zum Beispiel einer Dicke von 0,2 mm bis 0,3 mm.

Bei dieser Form der Wärmeübertragung an das Gehäuse 12 erweist sich eine elektrisch leitende Kontaktierung der oben beschriebenen Art, nämlich die einseitige Kontaktierung mittels Zellverbinder 16 mit federnden Kontaktzungen 46 und ebenfalls federnden Kontaktfahnen 48, als besonders günstig und entsprechend ist bei einer bevorzugten Ausführungsform vorgesehen, dass die Akkuzellen 14 zur Wärmeübertragung an das Gehäuse in der zuvor mit dem Schwerpunkt auf die elektrische Kontaktierung beschriebenen Art mechanisch gehalten sind. Die mechanische Halterung mittels der Kontaktzungen 46 und der Kontaktfahnen 48 gewährleistet nämlich eine axiale Fixierung der Akkuzellen 14 in dem Sinne, dass jede Akkuzelle 14 in dem Träger 18 sicher gehalten ist und mittels der Kontaktzungen 46 und der Kontaktfahnen 48 gleichsam eingespannt ist. Aufgrund der federnden Elastizität der Kontaktzungen 46 und der Kontaktfahnen 48 bleibt aber eine gewisse axiale Beweglichkeit erhalten. Diese axiale Beweglichkeit gilt für jede einzelne Akkuzelle 14 und besteht unabhängig von allen anderen Akkuzellen 14 in demselben Träger 18. Diese axiale Beweglichkeit gewährleistet, dass alle freien Stirnflächen der in einem Träger 18 platzierten Akkuzellen 14 an der Innenoberfläche des Gehäuses 12 oder an dem dort angebrachten Isolator 50 anliegen. Damit ist gewährleistet, dass jede einzelne Akkuzelle 14 an der Wärmeabgabe auf das Gehäuse 12 teilnimmt.

Vereinfacht kann man sich die Gegebenheiten als eine Vielzahl von auf einer gemeinsamen Grundplatte angebrachten, untereinander parallel und in Längsrichtung normal zur Ebene der Grundplatte ausgerichteten Spiralfedern denken. Die Grundplatte entspricht dem Träger 18 des gegenständlichen Akkumulatormoduls 10. Jede Spiralfeder entspricht einer Akkuzelle 14 des gegenständlichen Akkumulatormoduls 10. Die freien Enden der Spiralfedern entsprechen den freien Enden der Ackuzellen 14. Beim Aufpressen einer weiteren Platte auf die freien Enden der Spiralfedern ergibt sich in Abhängigkeit von dem dabei ausgeübten Druck irgendwann eine Position, bei der die freien Enden sämtlicher Spiralfedern mit der weiteren Platte in Kontakt sind. Dies ist die Situation, bei der die freien Stirnflächen der Akkuzellen 14 mit der Innenoberfläche des Gehäuses 12 oder dem darauf aufgebrachten Isolator 50 in Kontakt sind.

Wesentlich ist also, festzustellen, dass eine besonders effiziente Wärmeübertragung auf das Gehäuse 12 erreichbar ist, wenn die Akkuzellen 14 federnd gelagert sind, sodass alle Ackuzellen 14 in einem Träger 18 in gewissem Umfang unabhängig voneinander axial beweglich sind, obwohl sie grundsätzlich in dem Träger 18 axial fixiert sind. Die Kontaktzungen 46 und Kontaktfahnen 48 sind dabei nur ein Beispiel und eine mögliche Ausführungsform einer solchen federnden Lagerung.

In Figur 16 ist diese federnde axiale Beweglichkeit der Ackuzellen 14 in dem Träger 18 und relativ zu dem Träger 18 mittels der beidseitigen Blockpfeile gezeigt. Die gegabelten Blockpfeile zeigen die Wärmeübertragung von jeweils einer Ackuzelle 14 auf das Gehäuse 12 und veranschaulichen, dass sich die in das Gehäuse 12 übertragene Wärmeenergie dort entsprechend der physikalischen Gesetzmäßigkeiten verteilt, sodass anstelle der vergleichsweise kleinen Stirnflächen der Ackuzellen 14 die erheblich größere Oberfläche des Gehäuses 12 oder einer jeweiligen Seitenfläche des Gehäuses 12 zur Entwärmung der Akkuzellen 14 wirksam wird. Der neben dem Träger 18 eingezeichnete und in Richtung auf das Gehäuse 12 weisende Blockpfeil und der neben dem Gehäuse 12 eingezeichnete und in Richtung auf den Träger 18 und die darin platzierten Akkuzellen 14 weisende Blockpfeil veranschaulichen, dass zum Erhalt der thermischen Kontaktierung des Gehäuses 12 entweder der Träger 18 mit den darin platzierten Akkuzellen 14 in Richtung auf die betreffende Seitenwand des Gehäuses 12 oder das Gehäuse 12 oder dessen Seitenwand in Richtung auf die in dem Träger 18 platzierten Akkuzellen 14 bewegt werden.

Eine solche Bewegung eines Trägers 18 mit den darin zusammengefassten Akkuzellen 14 erfolgt mittels zumindest eines Distanzstücks 24 (Figur 2), wobei bei der in Figur 2 gezeigten Ausführungsform davon ausgegangen wird, dass das Gehäuse 12 zwei bestückte Träger 18 aufnimmt, bei denen die freien Enden der darin platzierten Akkuzellen 14 in entgegengesetzte Richtungen weisen. Das oder jedes Distanzstück 24 wird demgemäß zwischen die beiden Träger 18 eingeführt, nachdem diese gleichzeitig oder nacheinander in dem Gehäuse 12 platziert worden sind. Durch Einführen des oder jedes Distanzstücks 24 zwischen die beiden Träger 18 vergrößert sich der Abstand zwischen den Trägern 18 (Funktion des Distanzstücks 24 als Spreizelement), sodass diese durch das oder jedes Distanzstück 24 in Richtung auf die jeweils gegenüberliegende Seitenfläche des Gehäuses 12 gedrückt werden. Durch diese Verlagerung kommen schließlich die freien Stirnflächen der Ackuzellen 14 in Kontakt mit der Innenoberfläche der betreffenden Seitenwand des Gehäuses 12 oder einem dort angebrachten Isolator 50 und die gewünschte thermische Kontaktierung des Gehäuses 12 ist gegeben.

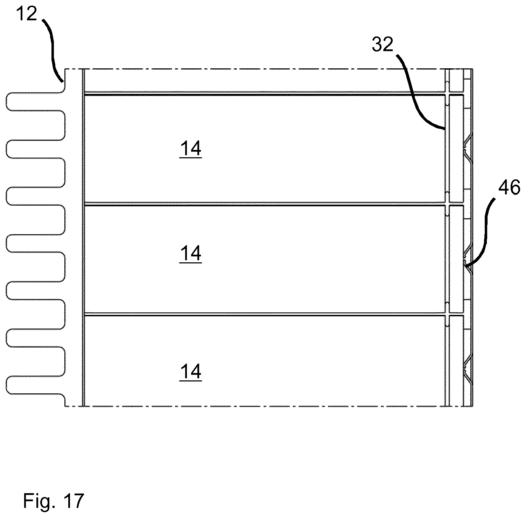

Die Darstellung in Figur 17 zeigt in einer Ausschnittsvergrößerung einen Teil des Gehäuses 12 gemäß Figur 2, wobei auch die optional an der Außenfläche des Gehäuses 12 vorhandenen Kühlrippen sichtbar werden, sowie einzelne mittels eines Trägers 18 gegen die Innenoberfläche der gezeigten Seitenwand des Gehäuses 12 gepresste Akkuzellen 14. Die erwähnte federnde axiale Beweglichkeit der Akkuzellen 14 ist mittels der auf den Mittelkontakt 28 drückenden Kontaktzungen 46 sowie der in die Einschnürung 32 eingreifenden Kontaktfahnen 48 gegeben.

Die Wärmeabgabe vom Gehäuse 12 an die Umgebung kann noch durch eine optionale zusätzliche Entwärmung des Gehäuses 12 unterstützt werden. Insoweit kommt zum Beispiel eine Kühlung mittels eines durch Kühlkanäle strömenden Fluids in Betracht. Die Kühlkanäle verlaufen zumindest in den von den Akkuzellen 14 thermisch kontaktierten Seitenwänden des Gehäuses 12 und/oder in dort gegebenenfalls vorhandenen Kühlrippen, wobei zum Beispiel mittels einer entsprechenden front- und rückseitigen Seitenfläche eine Umlenkung von einem Kühlkanal in einen nächstfolgenden Kühlkanal erfolgt.

Neben der bisher beschriebenen Entwärmung der Akkuzellen 14 kann zum Beispiel bei niedrigen Temperaturen und einem damit einhergehenden ungünstigen Alterungsverhalten der Akkuzellen 14 eine gesteuerte Erwärmung der Akkuzellen 14 erfolgen, wenn diese in der bisher beschriebenen Art die Innenoberfläche einer Seitenfläche des Gehäuses 12 oder einen dort angebrachten Isolator 50 thermisch kontaktieren. Dann wird das Gehäuse 12 oder die oder jede relevante Seitenfläche erwärmt, zum Beispiel elektrisch oder mittels eines durch Kühlkanäle im Gehäuse 12 strömenden erwärmten Fluids.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Die Erfindung ist ein Akkumulatormodul 10 mit optimierter Wärmeabfuhr, nämlich ein Akkumulatormodul 10 mit zumindest einem im Innern eines Gehäuses 12 des Akkumulatormoduls 10 platzierbaren und mit einer Mehrzahl von Akkuzellen 14 bestückbaren Träger 18, wobei jede Akkuzelle 14 in dem Träger 18 lediglich einseitig elektrisch kontaktiert ist und wobei der oder jeder mit Akkuzellen (14) bestückte Träger (18) im Innern des Gehäuses (12) in einer die freien Stirnflächen der Akkuzellen (14) thermisch an das Gehäuse (12) koppelnden Form platzierbar und bei einem in Betrieb befindlichen Akkumulatormodul 10 platziert ist.

### Bezugszeichenliste

- 10: Akkumulatormodul
- 12: Gehäuse
- 14: Akkuzelle
- 16: Zellverbinder
- 18: Träger
- 20: Rand (des Trägers)
- 22: Zapfen (am Träger)
- 24: Distanzstück
- 26: Isolierung (einer Akkuzelle)
- 28: stirnseitiger Kontakt / Mittelkontakt (einer Akkuzelle)
- 30: Mantelfläche (einer Akkuzelle)
- 32: Einschnürung (in der Mantelfläche einer Akkuzelle)
- 34: (frei)
- 36: Anschlussfahne
- 38: Anschlussfahne
- 40: horizontaler Abschnitt (am Zellverbinder)
- 42: vertikaler Abschnitt (am Zellverbinder)
- 44: seitlicher Abschnitt (am Zellverbinder)
- 46: Kontaktzunge (am Zellverbinder)
- 48: Kontaktfahne (am Zellverbinder)
- 50: Isolator

## Patentansprüche

1. Akkumulatormodul (10) mit zumindest einem im Innern eines Gehäuses (12) des Akkumulatormoduls (10) platzierbaren und mit einer Mehrzahl von Akkuzellen (14) bestückbaren Träger (18),
wobei jede Akkuzelle (14) in dem Träger (18) lediglich einseitig elektrisch kontaktiert ist und
wobei der oder jeder mit Akkuzellen (14) bestückte Träger (18) im Innern des Gehäuses (12) in einer die freien Stirnflächen der Akkuzellen (14) thermisch an das Gehäuse (12) koppelnden Form platzierbar ist,
**dadurch gekennzeichnet,**
**dass** jede Akkuzelle (14) in dem Träger (18) einzeln axial federnd gelagert ist.

2. Akkumulatormodul (10) nach Anspruch 1,
wobei die freien Enden der lediglich einseitig elektrisch kontaktierten Akkuzellen (14) über den Träger (18) hinausragen, in dieselbe Richtung weisen und die freien Stirnflächen der Akkuzellen (14) sich in einer Ebene oder zumindest im Wesentlichen in einer Ebene befinden.

3. Akkumulatormodul (10) nach Anspruch 2,
wobei zwei mit Akkuzellen (14) bestückte Träger (18) mittels zumindest eines Distanzstücks (24) im Gehäuse (12) fixierbar sind,
wobei die freien Stirnflächen der in den Trägern (18) platzierten Akkuzellen (14) zur Wärmeabfuhr an das Gehäuse (12) an der Innenoberfläche des Gehäuses 12 anliegen.

4. Akkumulatormodul (10) nach Anspruch 2 oder 3,
mit einem Isolator (50) zwischen den freien Stirnflächen der Akkuzellen (14) und einer Innenoberfläche des Gehäuses (12), wobei zur thermischen Ankopplung der freien Stirnflächen der Akkuzellen (14) an das Gehäuse (12), die freien Stirnflächen der Akkuzellen (14) an dem Isolator (50) anliegen und der Isolator (50) wiederum mit der Innenoberfläche des Gehäuses (12) verbunden ist.

5. Akkumulatormodul (10) nach Anspruch 4,
mit einem Isolator (50) in Form einer auf die Innenoberfläche zumindest einer Seitenfläche des Gehäuses (12) aufgebrachten Isolatorfolie.

6. Akkumulatormodul (10) nach einem der vorangehenden Ansprüche,
wobei zu einem Träger (18) eine Mehrzahl regelmäßig beabstandeter und parallel zueinander ausgerichteter Zellverbinder (16) gehört und
wobei jede Akkuzelle (14) in dem Träger (18) einzeln axial federnd gelagert ist, indem federnde Kontaktzungen (46) eines Zellverbinders (16) und Kontaktfahnen (48) eines weiteren Zellverbinders (16) jeweils eine Akkuzelle (14) kontaktieren.

7. Akkumulatormodul (10) nach Anspruch 6,
wobei jeder Zellverbinder (16) in einem gestuften Profil einen horizontalen Abschnitt (40), einen anschließenden vertikalen oder zumindest im Wesentlichen vertikalen Abschnitt (42) und einen wiederum daran anschließenden seitlichen Abschnitt (44) umfasst und
wobei die Kontaktzungen (46) zu dem horizontalen Abschnitt (40) und die Kontaktfahnen (48) zu dem seitlichen Abschnitt (44) gehören.

8. Akkumulatormodul (10) nach Anspruch 6 oder 7,
wobei die Akkuzellen (14) in ihrer Mantelfläche (30) eine Einschnürung (32) aufweisen und
wobei die Kontaktfahnen (48) in die Einschnürungen (32) der Akkuzellen (14) eingreifen.

9. Akkumulatormodul (10) nach einem der vorangehenden Ansprüche mit einem zumindest auf einer Seitenfläche außen mit Kühlrippen versehenen Gehäuse (12).

10. Akkumulatormodul (10) nach einem der vorangehenden Ansprüche mit einem Gehäuse (12) mit von einem Fluid durchströmbaren Kühlkanälen.

11. Elektrisches Gerät mit zumindest einem Akkumulatormodul (10) nach einem der vorangehenden Ansprüche.

## Claims

1. Rechargeable battery module (10) comprising at least one carrier (18) that can be placed in the interior of a housing (12) of the rechargeable battery module (10) and can be fitted with a plurality of rechargeable battery cells (14), each rechargeable battery cell (14) in the carrier (18) being electrically contacted on only one side and it being possible to place the or each carrier (18) fitted with rechargeable battery cells (14) in the interior of the housing (12) in a form that thermally couples the free end faces of the rechargeable battery cells (14) to the housing (12),
**characterized in that**
each rechargeable battery cell (14) is individually axially resiliently mounted in the carrier (18).

2. Rechargeable battery module (10) according to claim 1,
wherein the free ends of the rechargeable battery cells (14) which are electrically contacted on only one side protrude beyond the carrier (18) and point in the same direction, and the free end faces of the rechargeable battery cells (14) are located in one plane or at least substantially in one plane.

3. Rechargeable battery module (10) according to claim 2,
wherein two carriers (18) fitted with rechargeable battery cells (14) can be secured in the housing (12) by means of at least one spacer (24), wherein the free end faces of the rechargeable battery cells (14) that are placed in the carriers (18) abut the inner surface of the housing 12 in order to dissipate heat to the housing (12).

4. Rechargeable battery module (10) according to either claim 2 or claim 3,
comprising an insulator (50) between the free end faces of the rechargeable battery cells (14) and an inner surface of the housing (12), wherein, in order to thermally couple the free end faces of the rechargeable battery cells (14) to the housing (12), the free end faces of the rechargeable battery cells (14) abut the insulator (50) and the insulator (50) is in turn connected to the inner surface of the housing (12).

5. Rechargeable battery module (10) according to claim 4,
comprising an insulator (50) in the form of an insulator film attached to the inner surface of at least one lateral face of the housing (12).

6. Rechargeable battery module (10) according to any of the preceding claims,
wherein a plurality of evenly spaced cell connectors (16) oriented in parallel with one another is part of a carrier (18) and wherein each rechargeable battery cell (14) is individually axially resiliently mounted in the carrier (18) due to resilient contact tongues (46) of one cell connector (16) and contact lugs (48) of another cell connector (16) each contacting a rechargeable battery cell (14).

7. Rechargeable battery module (10) according to claim 6,
wherein, in a stepped profile, each cell connector (16) has a horizontal portion (40), an adjoining vertical or at least substantially vertical portion (42) and a lateral portion (44) which in turn adjoins said vertical portion, and wherein the contact tongues (46) are part of the horizontal portion (40) and the contact lugs (48) are part of the lateral portion (44).

8. Rechargeable battery module (10) according to either claim 6 or claim 7,
wherein the rechargeable battery cells (14) have a constriction (32) in the lateral surface (30) thereof, and wherein the contact lugs (48) engage in the constrictions (32) of the rechargeable battery cells (14).

9. Rechargeable battery module (10) according to any of the preceding claims
comprising a housing (12) that is externally provided with cooling fins at least on one lateral face.

10. Rechargeable battery module (10) according to any of the preceding claims comprising a housing (12) that has cooling channels through which a fluid can flow.

11. Electrical device comprising at least one rechargeable battery module (10) according to any of the preceding claims.

## Revendications

1. Module de batteries (10) comportant au moins un support (18) pouvant être placé à l'intérieur d'un boîtier (12) du module de batteries (10) et pouvant être équipé d'une pluralité de cellules de batterie (14), chaque cellule de batterie (14) dans le support (18) étant en contact électrique uniquement unilatéral, et le ou chaque support (18) équipé de cellules de batterie (14) pouvant être placé à l'intérieur du boîtier (12) de façon à coupler thermiquement les surfaces frontales libres des cellules de batterie (14) au boîtier (12), **caractérisé en ce que** chaque cellule de batterie (14) est montée individuellement, élastiquement et axialement dans le support (18).

2. Module de batteries (10) selon la revendication 1, dans lequel les extrémités libres des cellules de batterie (14) en contact électrique uniquement unilatéral dépassent au-delà du support (18), sont orientées dans la même direction, et les surfaces frontales libres des cellules de batterie (14) se trouvent dans un plan ou au moins essentiellement dans un plan.

3. Module de batteries (10) selon la revendication 2, dans lequel deux supports (18) équipés de cellules de batterie (14) peuvent être fixées dans le boîtier (12) au moyen d'au moins un espaceur (24), les surfaces frontales libres des cellules de batterie (14) placées dans les supports (18) reposant sur la surface intérieure du boîtier (12) pour la dissipation de chaleur vers le boîtier (12).

4. Module de batteries (10) selon la revendication 2 ou 3, comportant un isolateur (50) entre les surfaces frontales libres des cellules de batterie (14) et une surface intérieure du boîtier (12), les surfaces frontales libres des cellules de batterie (14) reposant au niveau de l'isolateur (50) pour le couplage thermique des surfaces frontales libres des cellules de batterie (14) au boîtier (12), et l'isolateur (50) étant à son tour relié à la surface intérieure du boîtier (12).

5. Module de batteries (10) selon la revendication 4, comportant un isolateur (50) sous la forme d'un film isolant appliqué sur la surface intérieure d'au moins une surface latérale du boîtier (12).

6. Module de batteries (10) selon l'une des revendications précédentes, dans lequel font partie d'un support (18) une pluralité de connecteurs de cellules régulièrement espacés et parallèles les uns aux autres (16), et dans lequel chaque cellule de batterie (14) dans le support (18) est montée individuellement, axialement et élastiquement par le fait que des languettes de contact (46) élastiques d'un connecteur de cellules (16) et des pattes de contact (48) d'un autre connecteur de cellules (16) sont respectivement en contact avec une cellule de batterie (14).

7. Module de batteries (10) selon la revendication 6, dans lequel chaque connecteur de cellule (16) comprend, dans un profil étagé, une section horizontale (40), une section verticale adjacente ou au moins essentiellement verticale (42) et une section latérale adjacente (44) à son tour à cette dernière, et dans lequel les languettes de contact (46) appartiennent à la section horizontale (40) et les pattes de contact (48) à la section latérale (44).

8. Module de batteries (10) selon la revendication 6 ou 7, dans lequel les cellules de batterie (14) présentent un rétrécissement (32) dans leur surface périphérique (30), les pattes de contact (48) venant en prise avec les rétrécissements (32) des cellules de batterie (14).

9. Module de batteries (10) selon l'une des revendications précédentes, comportant au moins un boîtier (12) pourvu extérieurement d'ailettes de refroidissement au moins sur une surface latérale.

10. Module de batteries (10) selon l'une des revendications précédentes, comportant un boîtier (12) pourvu de canaux de refroidissement pouvant être traversés par un fluide.

11. Appareil électrique comportant au moins un module de batteries (10) selon l'une des revendications précédentes.
